# EUROPÄISCHE PATENTSCHRIFT

(11) **EP 1 504 300 B1**
(45) Veröffentlichungstag und Bekanntmachung des Hinweises auf die Patenterteilung: **30.03.2011**
(21) Anmeldenummer: 03727475.0
(22) Anmeldetag: 14.05.2003
(51) Int. Cl.: G02B 21/00, G01N 21/64

(54) **VERFAHREN UND ANORDNUNG ZUR UNTERSUCHUNG VON PROBEN**
METHOD AND ARRANGEMENT FOR ANALYZING SAMPLES
PROCEDE ET SYSTEME POUR ANALYSER DES ECHANTILLONS

(30) Priorität: 16.05.2002 DE 10222779
(43) Veröffentlichungstag der Anmeldung: 09.02.2005
(73) Patentinhaber: Carl Zeiss MicroImaging GmbH, Carl-Zeiss-Promenade 10 07745 Jena (DE)
(72) Erfinder: GERSTNER, Volker, 99510 Kapellendorf (DE); LINDENAU, Jörg, 07743 Jena (DE)
(74) Vertreter: Hampe, Holger
(86) Internationale Anmeldenummer: PCT/EP2003/005033
(87) Internationale Veröffentlichungsnummer: WO 2003/098313

(56) Entgegenhaltungen:
- ANONYMOUS: "Cell Observer: Leben mit neuen Augen sehen" ZEISS BROCHURE, [Online] November 2000 (2000-11), Seiten 1-8, XP002257573 Gefunden im Internet: URL:http://www.zeiss.com/4125665F00581238/ 6E7DB0B5B13DF365C1256D12004D4BE5/7C7A24A00 E1DC79F412569D80046ACE6/$File/40-714_d.pdf > [gefunden am 2003-10-14]
- W. BÖCKER ET AL.: "Automated cell cycle analysis with fluorescence microscopy and image analysis" PHYS. MED. BIOL., [Online] 1996, Seiten 523-537, XP002257574 Gefunden im Internet: URL:http://ej.iop.org/links/29/VXRfx,Rp4kf 8JZJnDkVuHw/m60312.pdf> [gefunden am 2003-10-14]
- ANONYMOUS: "Particle Analyser: Schnelle Durchführung von Dokumentations- und Messaufgaben" ZEISS- NEWS, [Online] Mai 2002 (2002-05), Seiten 1-2, XP002257575 Gefunden im Internet: URL:http://www.zeiss.com/4125665F00581238/ 6E7DB0B5B13DF365C1256D12004D4BE5/B3ABFA03B E76BDF7C1256B9700423FB2/$File/40-722_d.pdf > [gefunden am 2003-10-14] -& ANONYMOUS: "Particle Analyzer - Die Funktionen" ZEISS BROCHURE, [Online] XP002257576 Gefunden im Internet: URL:http://www.zeiss.com/C12567BE00459794/ allBySubject/BE3FA5BF4F806BBEC1256BA000370 66C> [gefunden am 2003-10-14]

## Beschreibung

Die Erfindung bezieht sich auf ein Verfahren in der Fluoreszenzmikroskopie, insbesondere der Laser Scanning Mikroskopie zur Untersuchung von vorwiegend biologischen Proben, Präparaten und zugehörigen Komponenten. Eingeschlossen sind auf Fluoreszenzdetektion basierende Verfahren, wie zum Beispiel Fluoreszenz-Korrelationsspektroskopie, Verfahren zum Screenen von Wirkstoffen (High Throughput Sceening), Total Internal Reflection Fluorescence Microscopy (TIRF) und die Scanning Nahfeldmikroskopie.

Durch den Übergang von der Detektion von wenigen breiten spektralen Farbstoffbändern zur simultanen Aufnahme kompletter Spektren eröffnen sich neue Möglichkeiten bei der Identifikation, Separation und Zuordnung der meist analytischen oder funktionalen Probeneigenschaften. Hierbei werden spektrale, räumliche, dynamischen oder Kombinationen dieser Eigenschaften erfasst. Simultan-Untersuchungen von vielfach Markierungen an Chromosomen (Multicolor Banding; MCB, und FISH Technik oder verwandten Techniken) lassen sich sowohl an Metaphase als auch Interphase Präparationen zu wissenschaftlichen oder diagnostischen Zwecken durchführen.

Durch die simultane Erfassung von kompletten Spektren wird die Detektonseffizienz im Vergleich zu Verfahren nach Stand der Technik wesentlich erhöht. Die resultierende Steigerung der Sensitivität ermöglicht das Erfassen geringerer Farbstoffkonzentrationen und/oder die Reduktion der Intensität des verwendeten Anregungslichtes. Durch letzteres können Bleicheffekte und toxische Wirkungen der Anregung minimiert werden.

### Stand der Technik

Ein klassisches Anwendungsgebiet der Lichtmikroskopie zur Untersuchung von biologischen Präparaten ist die Fluoreszenzmikroskopie (Lit.: Pawley, "Handbook of biological confocal Microscopy"; Plenum Press 1995). Hierbei werden bestimmte Farbstoffe zur spezifischen Markierung von Zellteilen verwendet.

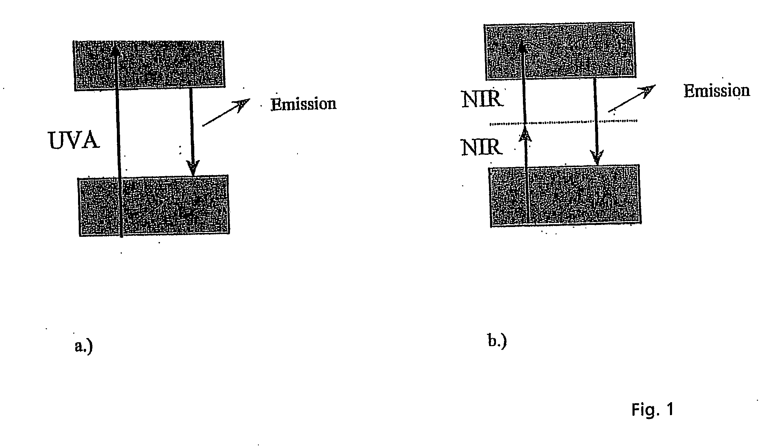

Die eingestrahlten Photonen einer bestimmten Energie regen die Farbstoffmoleküle durch die Absorption eines Photons aus dem Grundzustand in einen angeregten Zustand an. Diese Anregung wird meist als Einphotonen-Absorption bezeichnet (Abb. 1a). Die so angeregten Farbstoffmoleküle können auf verschiedene Weise in den Grundzustand zurück gelangen. In der Fluoreszenzmikroskopie ist der Übergang unter Aussendung eines Fluoreszenzphotons am wichtigsten. Die Wellenlänge des emittierten Photons ist aufgrund der Stokesverschiebung im Vergleich zur Anregungsstrahlung generell rot verschoben, besitzt also eine größere Wellenlänge. Die Stokesverschiebung ermöglicht die Trennung der Fluoreszenzstrahlung von der Anregungsstrahlung.

Das Fluoreszenzlicht wird mit geeigneten dichroitischen Strahlteilern in Kombination mit Blockfiltern von der Anregungsstrahlung abgespalten und getrennt beobachtet. Dadurch ist die Darstellung einzelner, mit verschiedenen Farbstoffen eingefärbten Zellteilen, möglich. Grundsätzlich können jedoch auch mehrere Teile eines Präparates gleichzeitig mit verschiedenen sich spezifisch anlagernden Farbstoffen eingefärbt werden (Mehrfachfluoreszenz). Zur Unterscheidung, der von den einzelnen Farbstoffen ausgesendeten Fluoreszenzsignale, werden wiederum spezielle dichroitischen Strahlteiler verwendet.

Neben der Anregung der Farbstoffmoleküle mit einem hochenergetischen Photon (Einphotonen-Absorption) ist auch eine Anregung mit mehreren Photonen geringerer Energie möglich (Abb. 1b). Die Summe der Energien der Einzelphotonen entspricht hierbei ungefähr einem Vielfachen des hochenergetischen Photons. Diese Art der Anregung der Farbstoffe wird als Mehrphotonen-Absorption bezeichnet (Lit.: Corle, Kino; "Confocal Scanning Optical Microscopy and Related Imaging Systems"; Academic Press 1996). Die Farbstoffemission wird durch diese Art der Anregung jedoch nicht beeinflußt, d.h. das Emissionsspektrum erfährt bei der Mehrphotonen-Absorption einen negativen Stokesshift, besitzt also eine geringere Wellenlänge im Vergleich zur Anregungsstrahlung. Die Trennung der Anregungs- von der Emissionsstrahlung erfolgt in der gleichen Art und Weise wie bei der Einphotonen-Absorption.

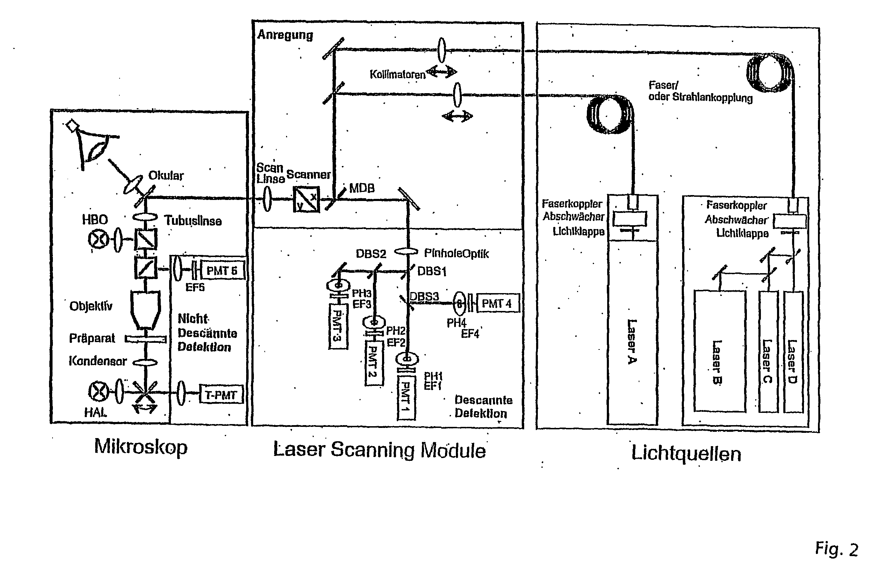

Der Stand der Technik soll im folgenden beispielhaft anhand eines konfokalen Laser-Scanning- Mikroskopes (LSM) erläutert werden (Abb. 2).

Ein LSM gliedert sich im wesentlichen in 4 Module: Lichtquelle, Scanmodul, Detektionseinheit und Mikroskop. Diese Module werden im folgenden näher beschrieben. Es wird zusätzlich auf DE19702753A1 verwiesen.

Zur spezifischen Anregung der verschiedenen Farbstoffe in einem Präparat werden in einem LSM Laser mit verschiedenen Wellenlängen eingesetzt. Die Wahl der Anregungswellenlänge richtet sich nach den Absorptionseigenschaften der zu untersuchenden Farbstoffe. Die Anregungsstrahlung wird im Lichtquellenmodul erzeugt. Zum Einsatz kommen hierbei verschiedene Laser (Argon, Argon Krypton, Helium-Neon, Festkörperlaser, Diodenlaser, TiSa-Laser etc.). Weiterhin erfolgt im Lichtquellenmodul die Selektion der Wellenlängen und die Einstellung der Intensität der benötigten Anregungswellenlänge, z.B. durch den Einsatz eines akusto- optischen Kristalls. Anschließend gelangt die Laserstrahlung über eine Faser oder eine geeignete Spiegelanordnung in das Scanmodul.

Die in der Lichtquelle erzeugte Laserstrahlung wird mit Hilfe des Objektivs beugungsbegrenzt über die Scanner, die Scanoptik und die Tubuslinse in das Präparat fokussiert. Die Scanner rastern punktförmig die Probe in x-y-Richtung ab. Die Pixelverweilzeiten beim Scannen über die Probe liegen meist im Bereich von weniger als einer Mikrosekunde bis zu einigen Sekunden.

Bei einer konfokalen Detektion (descanned Detektion) des Fluoreszenzlichtes, gelangt das Licht, das aus der Fokusebene (Specimen) und aus den darüber- und darunterliegenden Ebenen emittiert wird, über die Scanner auf einen dichroitischen Strahlteiler (MDB). Dieser trennt das Fluoreszenzlicht vom Anregungslicht. Anschließend wird das Fluoreszenzlicht auf eine Blende (konfokale Blende / Pinhole) fokussiert, die sich genau in einer zur Fokusebene konjugierten Ebene befindet. Dadurch werden Fluoreszenzlichtanteile die außerhalb des Fokus generiert wurden unterdrückt. Durch. Variieren des Blendendurchmessers kann die optische Auflösung des Mikroskops eingestellt werden. Hinter der Blende befindet sich ein weiterer dichroitischer Blockfilter (Emissionsfilter EF) der nochmals die Anregungsstrahlung unterdrückt. Nach Passieren des Blockfilters wird das Fluoreszenzlicht mittels eines Punktdetektors (PMT) gemessen.

Bei Verwendung einer Mehrphotonen-Absorption erfolgt die Anregung der Farbstofffluoreszenz in einem kleinen Volumen in dem die Anregungsintensität besonders hoch ist. Dieser Bereich ist nur unwesentlich größer als der detektierte Bereich bei Verwendung einer konfokalen Anordnung. Der Einsatz einer konfokalen Blende kann somit entfallen und die Detektion kann direkt nach dem Objektiv erfolgen (non descanned Detektion).

In einer weiteren Anordnung zur Detektion einer durch Mehrphotonen-absorption angeregten Farbstofffluoreszenz erfolgt weiterhin eine descanned Detektion, jedoch wird diesmal die Pupille des Objektives in die Detektionseinheit abgebildet (descanned Detektion).

In einer dreidimensional ausgedehnten Probe wird durch beide Detektionsanordnungen in Verbindung mit der entsprechenden Einphotonen bzw. Mehrphotonen-Absorption nur die Ebene der Probe (optischer Schnitt) wiedergegeben, die sich in der Fokusebene des Objektivs befindet. Durch die Aufzeichnung mehrerer optische Schnitte in der x-y Ebene in verschiedenen Tiefen z der Probe kann anschließend rechnergestützt ein dreidimensionales Bild der Probe generiert werden.

Das LSM ist somit zur Untersuchung von dicken Präparaten geeignet. Unterschiedliche Fluoreszenz-Farbstoffe zeichnen sich durch unterschiedliche Absorptions- und Emissionsspektren aus. Die Laserlinien zur Anregung des/der Farbstoffe werden entsprechend der Absorptionsspektren selektiert. Auf die Emissionseigenschaften des/der Farbstoffe abgestimmte dichroitische Filter stellen sicher, daß nur das vom jeweiligen Farbstoff ausgesendete Fluoreszenzlicht vom Punktdetektor gemessen wird.

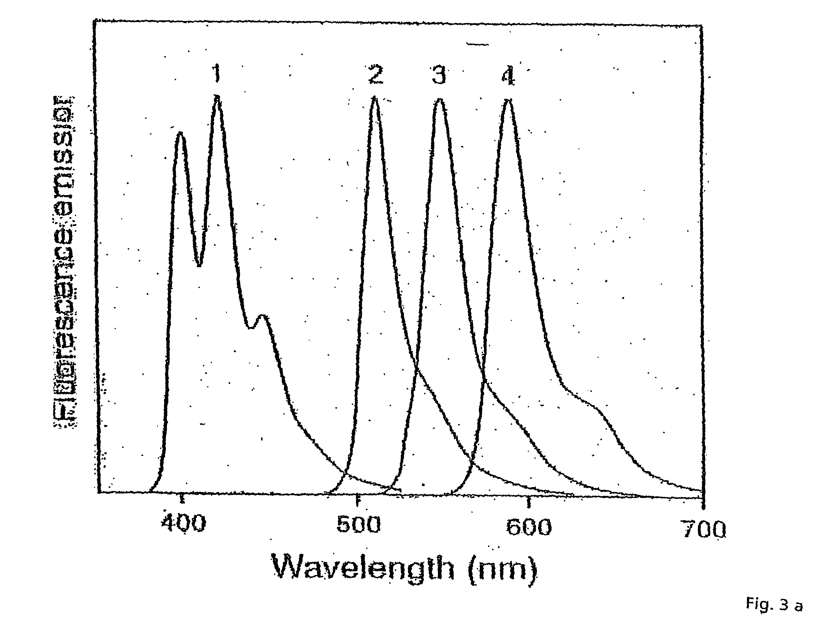

In biomedizinischen Applikationen werden zur Zeit mehrere verschiedene Zellregionen mit verschiedenen Farbstoffen gleichzeitig markiert (Multifluoreszenz). Die einzelnen Farbstoffe können mit dem Stand der Technik entweder aufgrund verschiedener Absorptionseigenschaften oder Emissionseigenschaften (Spektren) getrennt nachgewiesen werden (Abb 3a). Abb.3a zeigt die Emissionsspektren von verschiedenen typischen Farbstoffen. Aufgetragen ist die Intensität der Emission in Abhängigkeit von der Wellenlänge. Zu erkennen ist, daß sich die mit 1 bis 4 bezeichneten Farbstoffe in der Lage und Form ihrer Emissionsspektren unterscheiden. Nach dem Stand der Technik lassen sich die nach dem Stand der Technik existierenden Methoden zu spektralen Aufspaltung der Emissionsignale in zwei Katgorien einteilen.

### A Sequentielle Datenerfassung:

1.) Kombination eines spektral dispersiven Elements mit monochromatischer Detektion
2.) Methoden der interferometrischen Spektroskopie
3.) Multitracking i.e. Anderung der Anregungswellenlänge nach Bild oder Zeilenaufnahme zur Trennung von Farbstoffen mit unterschiedlichen Absorbtionseigenschaften (Verweis aus unsere Anmeldung)

### B Parallele Datenerfassung

### 1.) Spektrale Aufspaltung der Fluoreszenzemission mit Hilfe von Nebenfarbteilen und Emissionsfiltern

Die unter A1 und B3 beschriebenen Verfahren werden im Laser Scanning Mikroskop LSM 510 der Firma ZEISS angewendet

Durchflußzytometer dienen der Untersuchung und der Klassifikation von Zellen und anderen Partikeln. Die Proben werden hierzu in einer Flüssigkeit gelöst bzw. suspendiert und werden durch eine Kapillare gepumpt. Zur Untersuchung der Proben wird ein Laserstrahl von der Seite in die Kapillare fokussiert. Die Proben sind mit verschiedenen Farbstoffen oder fluoreszierenden Biomolekülen markiert. Gemessen wird die Fluoreszenzemisson und das gestreute Anregungslicht. Der Stand der Technik ist in "Flow Cytometry and Sorting", Second Edition, M.R. Melamed, T. Lindmo, M.L. Mendelsohn, Eds. Wiley & Sons, Inc. New York, 1990, pp 81-107 beschrieben.

Aus dem gestreuten Signal kann die Größe der Proben bestimmt werden. Mit Hilfe der Spektraleigenschaften der Fluoreszenz einzelner Proben können verschiedene Probenpartikel separiert/sortiert oder getrennt gezählt werden. Die Sortierung der Probenpartikel erfolgt über ein elektrostatisches Feld in verschiedene Auffangbehälter. Die Auswertung dieser Technik erfolgt mit hilfe von Histogrammen. Diese geben Auskunft über die Intensitäten der Markierungen sowie über die Anzahl der unterschiedlich markierten Proben. Die Durchflußgeschwindigkeit beträgt typischerweise einige 10-100 cm/s. Deshalb wird eine hochempfindliche Detektion benötigt. Zur Einschränkung des Detektionsvolumens erfolgt nach dem Stand der Technik eine konfokale Detektion.

Die Genauigkeit der Durchflußmessung wird von verschiedenen Faktoren beeinflußt. Diese sind zum Beispiel nicht spezifische Fluoreszenzen, Autofluoreszenzen von Zellen, Fluoreszenzen von Optikkomponenten und Rauschen der verwendeten Detektoren.

### Nachteile von Verfahren nach dem Stand der Technik

Farbstoffe mit stark überlappenden Anregungs und Emissionsspektren können kaum ohne Übersprechen voneinander getrennt werden. Dieses Problem verstärkt sich mit steigender Anzahl von zu detektierenden Fluoreszenztarbstoffen. Eine eindeutige Zuordnung der Emission eines Farbstoffes zu einem Detektionskanal ist damit nicht möglich. Dies ist aber für eine korrekte Aussage bei der Analyse von mehrfach markierten Proben zwingend notwendig.

Weitere bei Multifluoreszenz-Aufnahmen störende bzw. unerwünschte Effekte sind Überlagerungen durch Hintergrundsignale. Dies können Reflexionen einzelner Laser an der Probe oder auch breitbandige Autofluoreszenzsignale von Probenbestandteilen sein, die die spektralen Signaturen der zu untersuchenden fluoreszenzmarkierten Probenstellen überlagern und damit deren Untersuchung erschweren, teilweise sogar verhindern.

Chromosomen die mit hilfe der Multi Color Banding Technik, der FISH Technik oder verwandten Techniken mit bis zu 7 verschiedenen Farbstoffen markiert werden, stellen besonderer Anforderungen an die Detektion und Trennung der einzelnen Markierungen. Solche Proben können nach dem Stand der Technik mit allen unter A und B aufgeführten Methoden untersucht werden. Diese Methoden weisen folgende Nachteile auf:

B1 Bei der spektralen Aufspaltung der Fluoreszenzemission mit Hilfe von Nebenfarbteilen und Emissionsfiltern überschneiden sich die Emissionsspektren zunehmend mit steigender Anzahl der Farbstoffe. Dadurch kommt es zum Übersprechen. Eine eindeutige Zuordnung der Emission eines Farbstoffes zu einem Detektionskanal ist damit nicht möglich.

Die Methode A3 (Multitracking) löst das Problem nur dann, wenn sich die Anregungsspektren genügend voneinander unterscheiden. Dies ist jedoch bei der Verwendung mehrerer Farbstoffe nicht gegeben.

Die Methoden A1 (Kombination eines spektral dispersiven Elements mit monochromatischer Detektion) und A2 (Interferometrischen Spektroskopie) sind für sich genommen ebenfalls nicht in der Lage das Problem der überlappenden Emissionsspektern zu lösen. Sie eignen sich jedoch zur Erfassung der spektralen Information an einem Probenpunkt.

Die Kombination der Methoden A1 und A2 mit einem mathematischen Algorithmus zur Entmischung überlappender Spektren eignet sich prinzipiell zur Lösung des beschriebenen Problems (Schäfer Anmeldung? ASI Anmeldung). Nachteilig bei beiden Verfahren ist die geringere Effizienz im Vergleich zur unten beschriebenen Erfindung. Im Verfahren A1 wird zu Detektionszeitintervall jeweils nur ein schmales spektrales Band detektiert. Zur Erfassung eines Spektrums sind mehrere aufeinanderfolgende Messungen notwendig. Dadurch reduziert sich das Signal zu Rausch Verhältnis der Messung. Des weiteren werden durch die mehrfache Beleuchtung der Proben mit Anregungslicht die Fluoreszenzfarbstoffe und die Proben selbst (z.B. durch phototoxische Prozesse) geschädigt.

Bei Interferometrischen Methoden (A2) ist die Detektionseffizienz aufgrund theoretischer Überlegungen auf 50% reduziert. Um aus den Rohdaten Spektren zu erhalten ist hier eine Fourier Transformation erforderlich. Dabei werden die Daten typischerweise einer Digital Fourier Transformation (DFT) oder bei einer Anzahl von 2ⁿ Datenpunkten, einer Fast Fourier Transformation (FFT) unterzogen. Für diese Berechnungen ist ein nicht unerheblicher Rechenaufwand erforderlich.

US-A-5936731 offenbart auch ein Verfahren zur Multifluoreszenz-Aufnahme einer Probe.

### Beschreibung der Erfindung

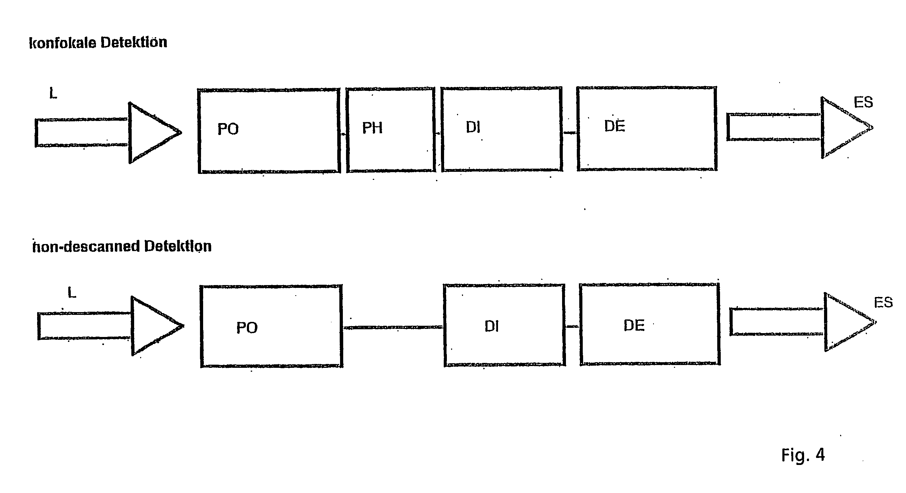

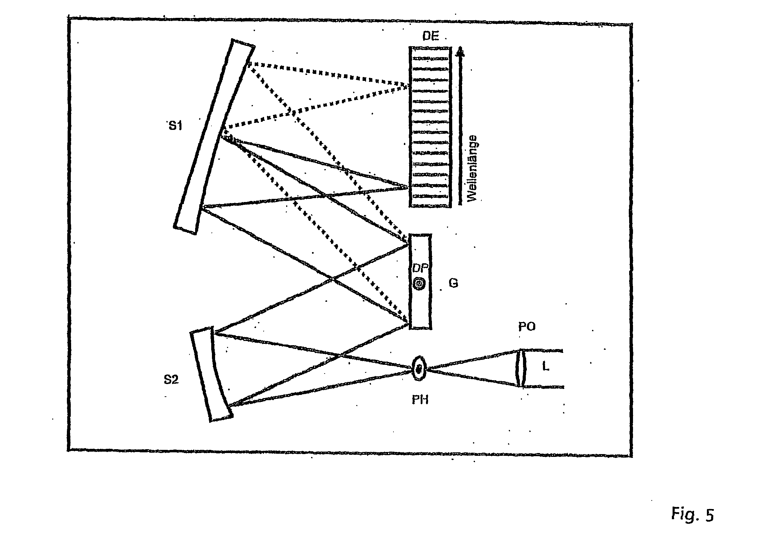

Hintergrund des erfindungsgemäßen Verfahrens ist eine spektral aufgespaltete Detektion der Fluoreszenz. Dazu wird das Emissionslicht im Scanmodul oder im Mikroskop (bei Mehrphotonen-Absorption) mit Hilfe eines Elementes zur Trennung der Anregungsstrahlung von der detektierten Strahlung wie dem Hauptfarbteiler (Main Dichroic Beam Splitter; MDB) oder einem AOTF gemäß DE19859314 A1 oder gemäß DE 19842288 vom Anregungslicht abgespalten. Bei Durchlichtanordnungen kann ein derartiges Element auch völlig entfallen. Ein Blockschaltbild der nun folgenden Detektoreinheit ist in Abb. 4 dargestellt. Das Licht der Probe L wird nun mit Hilfe von einer abbildenden Optik PO bei konfokaler Detektion durch eine Blende (Pinhole) PH fokussiert, wodurch Fluoreszenz, die außerhalb des Fokus entstand, unterdrückt wird. Bei einer nichtdescannten Detektion entfällt die Blende. Das Licht wird nun mit Hilfe eines winkeldispersiven Elements DI in seine Spektralanteile zerlegt. Als winkeldispersive Elemente kommen Prismen, Gitter und beispielsweise akusto optische Elemente in Frage. Das vom dispersiven Element in seine spektralen Komponenten aufgespaltete Licht wird im Anschluß auf einen Zeilendetektor DE abgebildet. Dieser Zeilendetektor DE mißt also das Emissionssignal in Abhängigkeit von der Wellenlänge und wandelt dies in elektrische Signale S um. Zusätzlich kann der Detektionseinheit noch ein Linienfilter zur Unterdrückung der Anregungswellenlängen vorgeschaltet werden. Verschiedene Varianten sind in Abb. 5 dargestellt. (Filterrad + Blende in Abb. 5 ergänzen)

Eine mögliche Ausführungsform des optischen Strahlenganges der in Abb. 4 im Blockschaltbild gezeigten Detektoreinheit ist in Abb. 5 dargestellt. Der Aufbau beschreibt im wesentlichen einen Czerny - Turner Aufbau. Bei einer konfokalen Detektion wird das Licht L der Probe mit der Pinholeoptik PO durch die konfokale Blende PH fokussiert. Bei einer nicht descanned Detektion im Falle einer Mehrphotonen-Absorption kann diese Blende entfallen. Der erste abbildende Spiegel S2 kollimiert das Fluoreszenzlicht. Anschließend trifft das Licht auf ein Liniengitter G, beispielsweise ein Gitter mit einer Linienzahl von 651 Linien pro mm. Das Gitter beugt das Licht entsprechend seiner Wellenlänge in verschiedene Richtungen. Der zweite abbildende Spiegel S1 fokussiert die einzelnen spektral aufgespaltenen Wellenlängenanteile auf die entsprechenden Kanäle des Zeilendetektors DE . Besonders vorteilhaft ist der Einsatz eines Zeilen-Sekundärelektronenvervielfachers z.B. Hamamatsu H7260. Der Detektor besitzt 32 Kanäle und eine hohe Empfindlichkeit. Der freie Spektralbereich der oben beschriebenen Ausführungsform beträgt etwa 350 nm. Der freie Spektralbereich wird in dieser Anordnung gleichmäßig auf die 32 Kanäle des Zeilendetektors verteilt, wodurch sich eine Auflösung von etwa 10 nm ergibt. Somit ist diese Anordnung nur bedingt zur Spektroskopie geeignet. Jedoch ist ihr Einsatz in einem bildgebenden System vorteilhaft, da das Signal pro Detektionskanal aufgrund des relativ breiten detektierten Spektralbandes noch relativ groß ist. Eine Verschiebung des freien Spektralbereiches kann zusätzlich durch eine Verdrehung um DP beispielsweise des Gitters erfolgen.

In den oben beschriebenen Ausführungsform(en) detektiert jeder Einzelkanal des Detektors DE ein Spektralband des Emissionsspektrums mit einer spektralen Breite von ca. 10 nm. Für jeden Probenpunkt wird die Summe der Spektralkomponenten der einzelnen Farbstoffe, die sich an dem gerade gemessenen Probenpunkt befinden, aufgezeichnet.

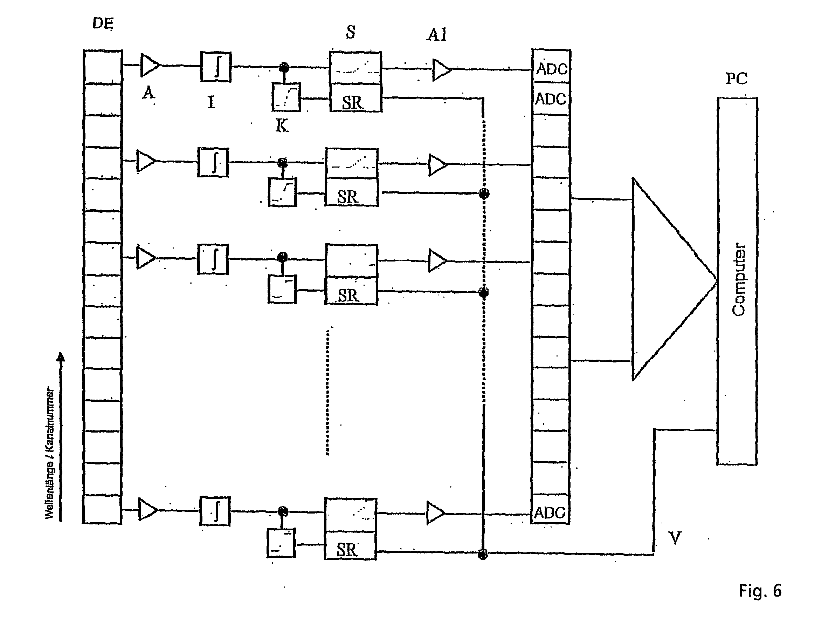

Eine Anordnung zum Auslesen der Einzelkanäle des Detektors DE ist in Abb. 6 schematisch dargestellt. Hierbei wird der an den Anoden eines Mehrkanal-PMT ( Detektor DE) fließende Strom, jeweils durch den ersten Amplifier A (als Strom-Spannungswandler geschaltet) in eine Spannung gewandelt und verstärkt. Die Spannung wird einem Integrator I zugeführt der über eine entsprechende Zeit (z.B. Pixelverweilzeit) das Signal integriert. Zur schnelleren Auswertung kann dem Integrator I ein Komparator K nachgeschaltet werden, der als einfacher Komparator eine Schaltschwelle hat, die bei Überschreitung ein digitales Ausgangssignal erzeugt oder der als Fensterkomparator ausgebildet ist und dann ein digitales Ausgangssignal bildet, wenn sich das Eingangssignal zwischen der oberen und unteren Schaltschwelle befindet oder wenn das Eingangssignal außerhalb (unter oder über) den Schaltschwellen liegt. Die Anordnung des Komparators bzw. des Fensterkomparators kann sowohl vor dem Integrator als auch danach erfolgen. Schaltungsanordnungen ohne Integrator (so genannter Verstärker-Mode) sind ebenfalls denkbar. Bei der Anordnung im Verstärker-Mode ist weiterhin der Komparator K auch nach entsprechender Pegelanpassung vorhanden. Der Ausgang des Komparators K dient als Steuersignal für ein Switch-Register SR, das direkt die aktiven Kanäle schaltet (online) oder der Zustand wird dem Computer über eine zusätzliche Verbindung V mitgeteilt, um eine individuelle Auswahl der aktiven Kanäle zu treffen (off-line). Das Ausgangssignal des switch-Registers SR wird direkt einem weiteren Verstärker A1 zur Pegelanpassung, für die nachfolgende A/D-Wandlung AD zugeführt. Die AD gewandelten Werte, d.h. das in jedem Bildpunkt gemessene spektral aufgelöste Fluoreszenzsignal der Probe wird über eine geeignete Datenleitung an einen Rechner (PC oder Digital-Signal-Prozessor DSP) zur Datenverarbeitung übertragen. Aus den einzelnen spektral aufgelöst gemessenen Bildpunkten werden im Anschluß je nach Scanmode Lambda Stacks (spektrale Verteilung pro Probenpunkt, gemessen mit den Detektionskanälen mit dispersiver Aufspaltung der detektierten Strahlung, abgelegt in Speicherelementen unter Zuordnung zu mindestens einer zusätzlichen Koordinate: Bildpunkt [Koordinaten x,y] und / oder Z und / oder Meßzeit t)
mit den zusätzlichen Koordinaten x, y, z, Zeit und Lebensdauer gebildet, wobei
■ X und Y durch SC abgerastert wird
■ Z beispielsweise durch eine Verschiebung des Präparats entlang der optischen Achse erfolgt
■ Zeit: die Datenaufnahme zu verschiedenen Zeiten erfolgt
■ Lebensdauer: die Datenaufnahme zeitaufgelöst innerhalb der Fluoreszenzlebensdauer erfolgt

Zur Vermeidung von Artefakten ist es bei einer Fluoreszenzmessung sinnvoll, von der Probe gestreutes Anregungslicht zu unterdrücken oder zumindest so stark abzuschwächen, dass seine Intensität kleiner als oder in der gleichen Größenordnung wie das Emissionsmaximum ist. Hierzu kann der oben beschriebene zusätzliche Linienfilter oder ein entsprechend optimierter Hauptfarbteiler (MDB) zur optischen Abschwächung verwendet werden. Alternativ kannauch ein AOTF als Hauptfarbteiler verwendet werden, wie in DE19859314 A1 oder DE 19842288 A1 beschrieben. Da die spektrale Breite der Anregungslaserstrahlung sehr viel kleiner als die vom Einzelkanal detektierte Bandbreite ist, kann die rückgestreute bzw. reflektierte Anregungsstrahlung auch durch ein gezieltes Ausschalten des entsprechenden Einzelkanals mit dem in Abb. 6 dargestellten SR erfolgen. Trifft die Anregungsweüenlänge auf zwei Detektionskanäle, so kann durch eine Verdrehung des Gitters, eine Verschiebung des Zeilendetektor oder eine Verkippung von S1 oder S2 in Abb. 5 die Anregungslinie so verschoben werden, dass sie nur auf einen Detektionskanal fällt.

In den beiden oben beschriebenen Anordnungen wurde vorzugsweise eine Integratorschaltung zur Detektion der Einzelkanalsignale verwendet. Uneingeschränkt kann jedoch auch eine Photonenzählung in den Einzelkanälen erfolgen. Die gezählten Photonen können anschließend addiert werden. Vorzugsweise würde hierfür eine APD (Avalanche Photodioden) - Zeile als Detektor verwendet werden.

Im folgenden werden verschiedene Methoden zur Darstellung der Informationen der Probe, d.h. der Lambda Stacks beschrieben.
Durch oben beschriebenes Verfahren zur Aufnahme von Lambda Stacks erhält man einen Stapel von x-y-Bildern, die die Fluoreszenz-Intensitätswerte aus benachbarten, sehr schmalen Wellenlängenbereichen enthalten. Komplexere Daten erhält man durch die Kombination der Aufnahme dieser Lambda Stacks mit z-Stapeln oder/und Zeitserien.

Die Aufbereitung dieser Daten kann in verschiedener Weise erfolgen:

### a) Lambda-Maximum-Projektion

Hier wird ein Graustufen-Bild aus dem Lambda Stack erzeugt, indem für jede x-y-Pixel-Position über die Wellenlängenbereiche der maximale Intensitätswert ermittelt wird, der die Helligkeit des entsprechenden Pixels des Projektionsbildes definiert.

### b) Lambda-Coded-Projektion

Hierbei wird wie bei a) eine Lambda-Maximum-Projektion berechnet und jedes Pixel mit der Farbe versehen wird, die der mittleren Wellenlänge des Wellenlängenbereiches entspricht, aus dem das hellste Pixel des Lambda Stacks stammt.

### c) Galerie-Ansicht für einen einfachen Lambda Stack (xy□)

Hier werden die Einzelbilder des Lambda Stacks zumindest teilweise in einer Serie dargestellt. Hierbei kann zusätzlich für jedes Bild die mittlere Wellenlänge des Bereichs, in dem die Intensitäten aufgenommen wurden, angezeigt werden.

### d) Galerie-Ansicht für komplexere Lambda Stacks

Werden xy-Lambda Stacks über z oder/und über die Zeit aufgenommen, so können Schieber verwendet werden, um in der Galerie die jeweilige Serie einer z-Ebene oder eines Zeitpunktes anzeigen zu lassen. In einer anderen Form können alle xy-Bilder der Aufnahme gleichzeitig dargestellt werden, indem die spektral unterschiedlichen Bilder in Zeilen und die zeitlich bzw. in z-Ebene unterschiedlichen Bilder in Spalten dargestellt werden. Es kann zwischen folgenden Galerie-Ansichten gewählt werden: xy-□, xy-z, xy-t, xy-□z, xy-□-t, xy-z-t; wobei man mittels Schiebern durch die jeweils nicht genannte Dimension blättern kann.

Die Kombination von Lambda-Max oder Lambda-Coded-Projektionen mit der Gallerie-Ansicht in Zeilen und Spalten ermöglicht die simultane Darstellung von xy-z-t-□-Informationen.

### e) Orthogonalschnitte durch Lambda Stacks

Diese Darstellung zeigt eine selektierte □-Ebene eines Lambda Stacks mit jeweils einer horizontalen und vertikalen Markierungslinie, die frei positionierbar sind. An diesen Linien wird der Lambda Stack durchschnitten und das entstehende Schnittbild neben (y-Schnitt) und über (x-Schnitt) die □-Ebene projiziert. Eine Pseudo-Echtfarbkodierung kann optional durchgeführt werden. Hierbei wird jedem Wellenlängenbereich seine entsprechende Spektralfarbe zugeordnet. Durch Überlagerung der einzelnen Farbanteile in einem Bild entsteht ein farbgetreues Abbild der Probe.

### Definition von Referenzspektren über ROIs

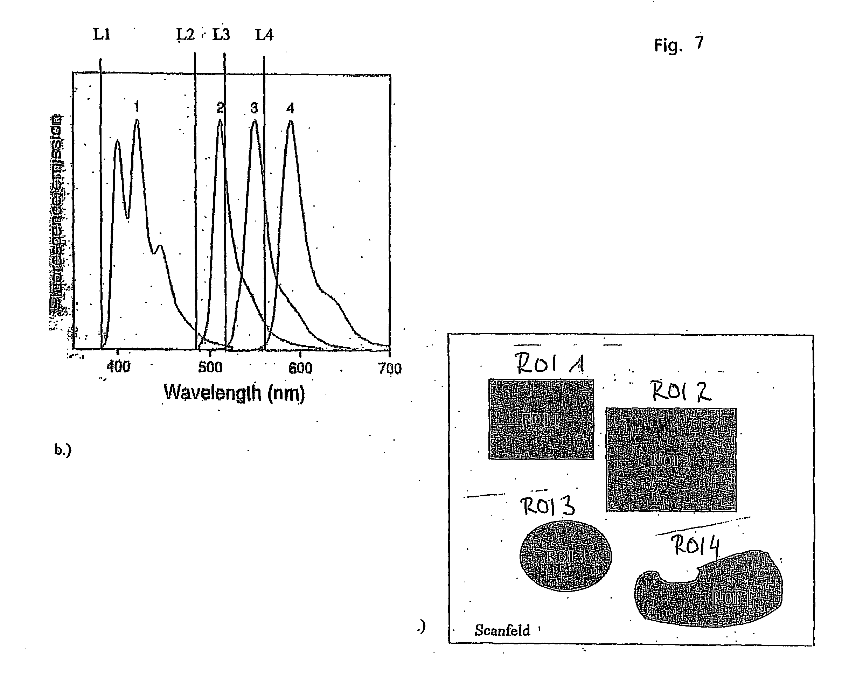

Referenzspektren sind z.B. die Emissionsspektren einzelner Farbstoffe in Reinstform oder unter Probenbedingungen, d.h. im Lösungsmittel gelöst bzw. gebunden an Probenstrukturen in einzelnen diskreten Regionen der zu untersuchenden Probe. Die Auswahl Bildbereiche zur Generierung von Referenzspektren kann über die Definition von Regionen des Interesses (Regions of Interest ROI) mit den folgenden Verfahren erfolgen.
Lambda Stacks beinhalten für jedes Pixel zusätzlich die spektrale Information. Abb. 7a zeigt schematisch eine Verteilung von verschiedener ROIs (ROI 1-4) in einem LSM-Bild, die beispielsweise verschieden angefärbte Regionen einer Probe repräsentieren. In Abb. 7b sind typische zugehörige Emissionsspektren 1-4 mit ihren Anregungswellenlängen (L1-L4) dargestellt. Die Einstellung der ROIs durch den Nutzer kann beispielsweise wie folgt geschehen: Nach der Aufnahme eines Lambda Stacks unter Verwendung aller oder der meisten zum Anregen der Farbstoffe in den einzelnen ROI-s notwendigen Anregungslinien können Summenkanäle zwischen den einzelnen Anregungslaserlinien gebildet werden (L1 bis L2, L2 bis L3, L3 bis L4 und L4 gemäß Fig.6 bis zur maximalen Emissionswellenlänge). Diese Summenkanäle entsprechen Teilen der Fluoreszenzbänder der einzelnen Farbstoffe. Weiterhin erfolgt eine gleichzeitige Summation der Signale verschiedener Farbstoffe in gleichen Summenkanälen aufgrund der starken Überlagerung. Diese Summenkanäle werden im Anschluß farbkodiert in verschiedenen Bildkanälen abgelegt und miteinander überlagert dargestellt. Aufgrund der verschiedenen lokalen Farbmischungen in den Bildkanälen können die verschiedenen ROIs durch den Nutzer oder durch automatische Mustererkennung lokalisiert werden.
In einem 2. Verfahren zur Einstellung der verschiedenen ROIs erfolgt eine Vermessung des Fluoreszenzschwerpunktes (DE10033180A1). Hierzu werden im Detektor alle Einzelkanäle, die mit Anregungslaserlinien bestrahlt werden abgeschalten. Jede ROI besitzt aufgrund der veränderten Emissionseigenschaften der jeweils verwendeten Farbstoffe einen charakteristischen Fluoreszenzschwerpunkt.
Somit können die verschiedenen ROIs durch die Lage des charakteristischen Farbschwerpunktes unterschieden und getrennt sichtbar gemacht werden.

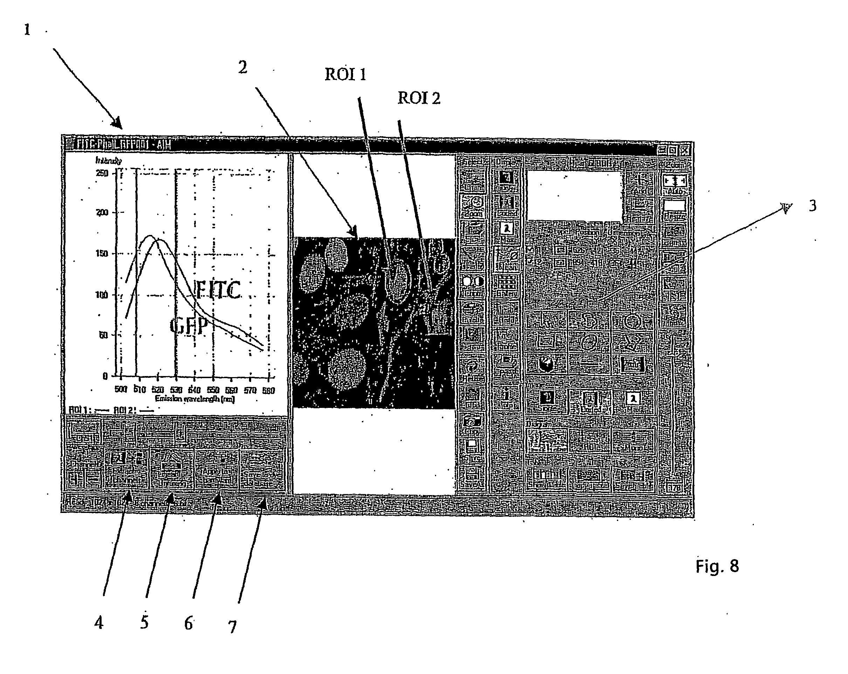

Zur Sichtbarmachung der spektralen Signaturen beliebig ausgewählter Probenstellen kann der Benutzer die ROI-Funktion einsetzen (ROI: Region Of Interest; s. Abb. 8). Hierbei werden mit einem Zeichenwerkzeug 3 (z. B. Polygon, Ellipse oder geschlossener Spline) ein Bereich (in Abb. 8 ROI 1 und ROI 2) aufgenommenen Probe im Bild 2 markiert und der Graph der entsprechenden spektralen Signatur graphisch (Diagramm 1) durch Mittelwertbildung der im ROI eingeschlossenen x-y-Pixel für jeden □-Ebene des Lambda Stacks ermittelt.
Prinzipiell können mehrere Spektralsignaturen verschiedener ausgewählter Probenstellen gleichzeitig dargestellt werden, entweder in einem gemeinsamen oder in getrennten Diagrammen 1.
Die visualisierten Spektralsignaturen 1 geben Aufschluss über die spektrale Verteilung der Fluoreszenzemission in den gewählten Probenstellen.
Bei Darstellung mehrerer Spektralsignaturen verschiedener ROIs kann beispielsweise ermittelt werden, ob die Emissionsspektren der verwendeten Farbstoffe sich signifikant überlagern.

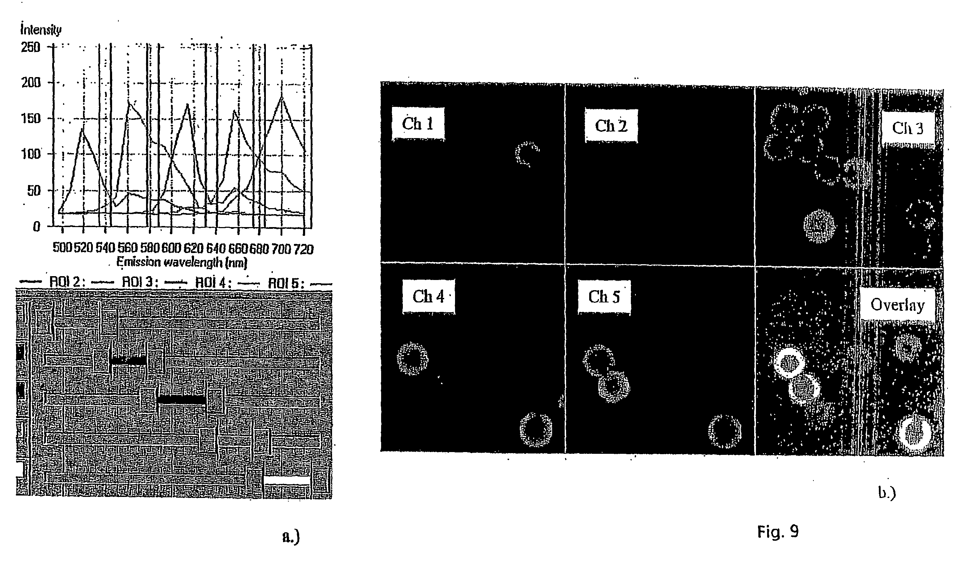

Die Spektralsignaturen der verschiedenen ROIs können wie in Abb. 9 gezeigt zur Erzeugung eines farbkodierten Mehrkanalbildes (Bedienelement "Extract to Channels", Abb. 8 Nr.4 dienen. Es können mit Hilfe der Spektralsignaturen Wellenlängenbereiche ausgewählt (Abb. 9a: ROI 1 bis 5) und die Intensitätswerte der entsprechenden Ebenen des Lambda Stacks z. B. durch Summation oder Mittelwertbildung über die entsprechenden Wellenlängenbereiche für jeden Bildpunkt zusammengefaßt werden, um so ein Mehrkanalbild (Abb. 9b) zu erzeugen, wobei jeder Bildkanal einen Farbstoff repräsentiert (Ch 1 bis CH 5)).
Zusätzlich können diese Einstellung zur elektronischen Summation (siehe Abb. 6) der Einzelkanäle verwendet werden ("Extract to Hardware", Abb. 8Nr.6. Anschließend können Mehrkanalbilder mit den entsprechenden Einstellungen direkt gescannt werden.

Für eine spätere Wiederverwendung können die spektralen Signaturen einzelner ROIs, d.h. einzelner Farbstoffe in ihrer spezifischen Umgebung in einer Spektral-Datenbank (Abb. 8 Nr.7) gespeichert werden, wobei zusätzlich zu den Daten der Graphen auch die für die Aufnahme des Lambda Stacks spezifischen Parameter, wie verwendete Laserlinien, Intensitäten, Filterkonfigurationen (MDB, NFT, EF) und Einstellung des Detektors (Verstärkung, Integrationszeit, Pinholeposition und -durchmesser), sowie zusätzliche Kommentare zur Umgebung / Präparation des zu untersuchenden Präparates gespeichert werden können.

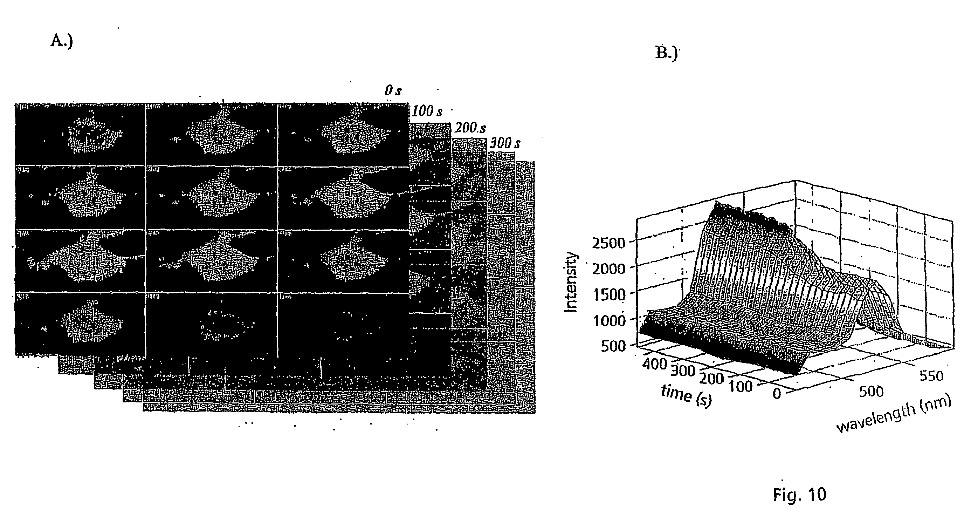

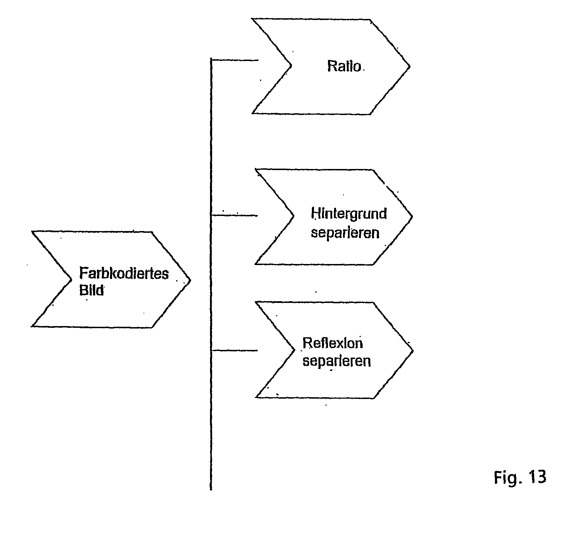

Bei einer Aufnahme von Lambda Stacks über einen Zeitraum können Spektralsignaturen zu verschiedenen Zeitpunkten ermittelt und in einer Serie zusammengefaßt werden. Im Anschluß können diese Daten in einer 3D-Darstellung, z.B. entsprechend Abb. 10 visualisiert und die zeitliche Änderung der Spektralsignaturen in verschiedenen ROIs vermittelt werden. Diese Darstellung kann vorteilhaft bei der Auswertung von Experimenten wie FRET (Fluorescence Resonance Energy Transfer) oder FRAP (Fluorescence Recovery After Photobleaching) mit zwei oder mehr Fluoreszenzfarbstoffen gleichzeitig eingesetzt werden (s. Abb. 10). Dargestellt in Teilbild b ist das Fluoreszenzsignal (Intensity) in Abhängigkeit von der Wellenlänge (wavelength) und dem Zeitpunkt (time). Man erkennt, dass das Signal im Wellenlängenbereich von 530 nm bis 560 nm mit der Zeit zunimmt. Eine weitere Darstellungsform ist in Abb. 13a gezeigt. Dargestellt sind die spektralen Einzelkanäle zu verschieden Zeitpunkten. Jedes Teilbild repräsentiert hierbei beispielsweise einen Wellenlängenbereich von 10 nm.

Algorithmen zur Analyse, z.B. zur selektiven Darstellung der Beiträger einzelner Farbstoffe zum gesamten von der Probe abgestrahlten Fluoreszenzsignal werden im folgenden beschrieben. Die Analyse kann quantitativ oder qualitativ erfolgen. Bei einer quantitativen Analyse wird pro Bildpunkt der Beitrag (d.h. die Konzentration) jedes einzelnen Farbstoffs zum gesamten von der Probe abgestrahlten Fluoreszenzsignal berechnet. Zum Einsatz kommen Algorithmen wie z.B. eine lineare Entmischungsanalyse (Lit.: Lansford, et al.; Journal of Biomedical Optics 6(3), 311-318, (July 2001)). Zur Analyse werden so genannte Referenzspektren benötigt. Diese beschreiben das Fluoreszenzspektrum eines einzelnen Farbstoffs. Die Genauigkeit der Ergebnisse hängt entscheidend von der Genauigkeit der Referenzspektren ab. Deshalb erfolgt erfindungsgemäß in einem Verfahren die Aufnahme der Referenzspektren simultan während der Untersuchung des Präparats (s.u.). Die Beiträge der jeweiligen Farbstoffe werden in verschiedene Bildkanäle eingeordnet, wobei jedem Bildkanal eine spezifische Farbe zugeordnet wird. Die Helligkeit der Farbe wird durch die Größe des Beitrags bestimmt. Im Anschluß können die einzelnen Bildkanäle überlagert in einem Bild dargestellt werden und es entsteht ein farbkodiertes Bild (s. o. Lambda coded).
Bei einer qualitativen Analyse erfolgt eine Klassifizierung, d.h. jedem Bildpunkt wird jeweils nur der Farbstoff, der den größten Beitrag zum gesamten von der Probe abgestrahlten Fluoreszenzsignals erzeugt, zugeordnet. Die Zuordnung erfolgt wiederum in einem Bild in verschiedene Bildkanäle, wobei jedem Bildkanal eine spezifische Farbe zugeordnet werden kann. Verwendet werden hierzu Algorithmen wie z.B. eine principal component analysis (PCA / Lit.: I.T. Joliffe, Principal Component Analysis, Springer-Verlag, New York, 1986.). Man erhält durch diese Art von Algorithmen eine so genannte Maskierung des Bildes (Farbstoffmaske), wobei sich in Bereichen gleicher Farbe identische Farbstoffe befinden.

Im folgenden werden Verfahrensabläufe zur Trennung von Farbstofffluoreszenzen erläutert.

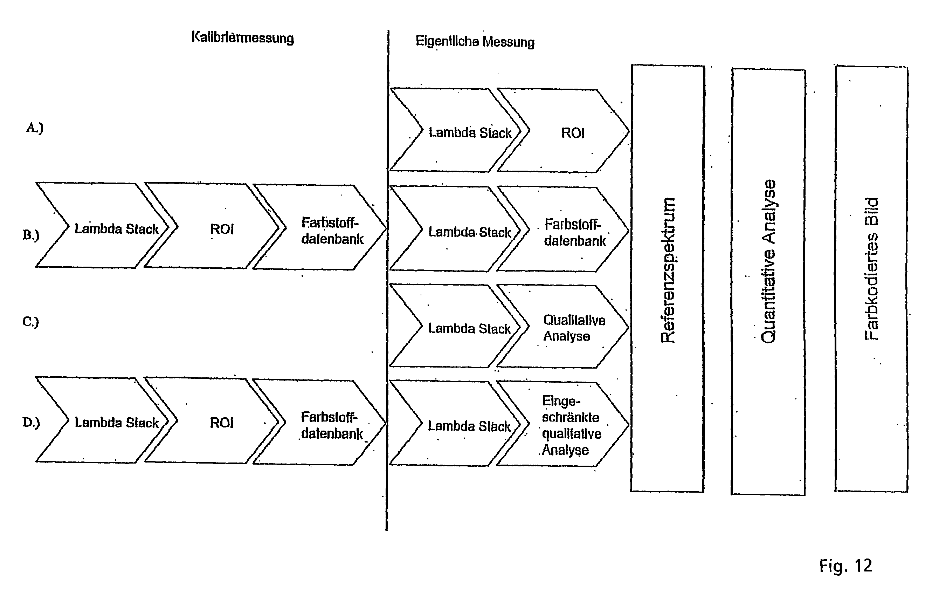

Für den Fall, daß die Spektralsignaturen der selektierten ROIs jeweils nur das Emissionssignal von genau einem der verwendeten Farbstoffe in der Probe repräsentieren (Referenzspektren), so können diese besonders vorteilhaft für eine quantitative Analyse (z.B. digitale Entmischung, Abb. ( Nr.5) der Emissionssignale verwendet werden (Abb. 12a). Diese hat als Eingangsdaten den zugrundeliegenden Lambda Stack sowie die Spektralsignaturen von n gewählten Probenstellen (ROI), wobei n die Anzahl der in der Probe verwendeten Farbstoffen ist. Das Ergebnis der quantitativen Analyse (z.B. Entmischung) ist ein Bild aus n einzelnen Bildkanälen, die jeweils nur die Information der Emissionssignale von einem Farbstoff enthalten.

Eine weitere Vorgehensweise zur quantitativen Analyse (z.B. digitalen Entmischung) der Emissionssignale verwendet als Eingangsdaten einen Lambda Stack und dazu Referenzspektren, die zuvor in einer Spektren-Datenbank gespeichert wurden (Abb. 12b). Diese Referenzspektren können einem Experiment (Kalibriermessung) entstammen, bei dem eine Probe (oder spezifische Regionen) mit jeweils nur genau einem Fluoreszenzfarbstoff markiert wurde. Diese Vorgehensweise ist beispielsweise erforderlich, wenn die Farbstoffe im eigentlichen Experiment überwiegend ko-lokalisieren und so nicht für jeden Farbstoff eine Probenstelle mit reinem Emissionssignal, ohne spektrales Übersprechen einer anderen Emission, gefunden werden, d.h. kein ROI eingezeichnet kann.
Zusätzlich können die Referenzspektren aus der Datenbank vor Aufnahme des Lambda Stacks durch den Nutzer ausgewählt werden und während der Akquisition sofort eine quantitative Analyse (z.B. digitale Entmischung) des Lambda Stacks durchgeführt werden. Als Ergebnis wird das n-kanalige Bild auf dem Bildschirm angezeigt. Eine speicherintensive Zwischenspeicherung der Lambda Stack-Daten kann hierbei entfallen.

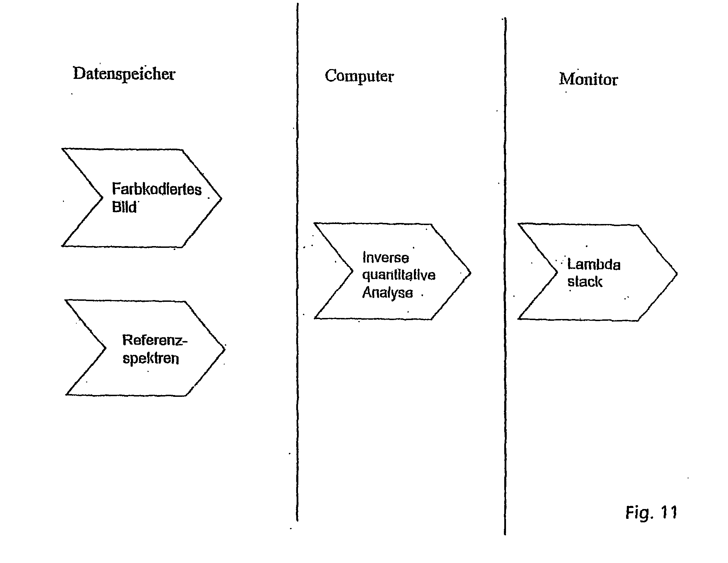

In einem weiteren in Abb. 11 schematisch dargestellten Verfahren werden quantitativ analysierte Datensätze (farbkodiertes Bild) und die Referenzspektren entsprechend der Anzahl der Farbstoffe auf einem Datenträger anstatt des Lambda Stacks abgelegt. Dies hat den Vorteil, dass die Größe des Datensatzes ohne gravierenden Verlust an Signalinformation gespeichert werden kann. Wird beispielsweise ein Lambda Stack mit 32 Einzelkanälen in 512x512 Bildpunkten und 8 bit detektiert so beträgt die Größe des Bildstapels ca. 16 Megabyte. Durch Speicherung des farbkodierten Bildes verringert sich die Größe des Datensatzes um einen Faktor 32 auf ca. 0.5 Megabyte zuzüglich der Referenzspektren. Die Anzahl der Datenpunkte in den Referenzspektren beträgt 32 multipliziert mit der Anzahl der Farbstoffe. Aus den abgelegten Daten (Referenzspektren) und farbkodierten Bild kann im Anschluß im Computer wieder der Lambda Stack berechnet werden. Die Berechnung erfolgt im einfachsten Falle durch eine Multiplikation der Referenzspektren mit den jeweiligen Bildkanälen des farbkodierten Bilds. Eine Datenreduktion ist insbesondere bei der Aufnahme von so genannten Zeitserien oder von Zeitserien mit dreidimensionaler Bildinformation nötig.

In einem weiteren Verfahren, dessen Ablaufschema in Abb. 12C dargestellt ist erfolgt ausgehend vom Lambda Stack im ersten Schritt eine qualitative Analyse. Durch diese Analyse können zum einen Bereiche im Präparat aufgesucht werden, in denen sich gleiche Farbstoffe räumlich verteilt befinden. Zum anderen können automatisch ohne Eingriff des Nutzers die für die anschließende quantitative Analyse benötigten Referenzspektren generiert werden. Für die qualitative Analyse z.B. PCA sind keine zusätzlichen Eingangsparameter außer dem Lambda Stack nötig. Die so gewonnenen Referenzspektren und der Lambda Stack dienen im Anschluß als Eingangsparameter für eine quantitative Analyse deren Ergebnis wiederum eine farbkodiertes Bild ist.
In einem weiteren Verfahren nach Abb. 12D erfolgt eine eingeschränkte qualitative Analyse des Lambda Stacks. Bei der eingeschränkten qualitativen Analyse werden nur Spektren zugelassen, die vorher durch den Nutzer definiert worden sind und z.B. in einer Farbstoffdatenbank abgelegt wurden. Der Algorithmus sucht aus diesen vordefinierten Farbstoffspektren die Exemplare (d.h. Farbstoffe) heraus, die am besten zu dem spektral aufgelöst gemessenen Fluoreszenzsignal passen und definiert somit wiederum die Referenzspektren. Die so gewonnenen Referenzspektren und der Lambda Stack dienen im Anschluß als Eingangsparameter für eine quantitative Analyse deren Ergebnis wiederum eine farbkodiertes Bild ist.

Eine weitere Anwendung der oben beschriebenen Verfahren besteht in der Separierung von Signalen, die für jeweilige Untersuchung nicht von Interesse sind bzw. ihre Analyse stören. Dies können z.B. Hintergrundlicht, Autofluoreszenzen, rückgestreutes Anregungslicht oder Raumlicht sein. Wird zunächst die spektrale Verteilung dieser Signale in nicht weiter angefärbten Kontroll-Präparationen (Autofluoreszenz, rückgestreutes Anregungslicht) oder in Abwesenheit der Präparate (Hintergrundlicht, Raumlicht) ermittelt, können die erhaltenen Spektren wie die Referenzspektren der zu untersuchenden Farbstoffe in die lineare Entmischungsanalyse mit einbezogen werden (Figuren 12 und 13). Nach Entmischung werden sie damit einem separaten Bildkanal zugewiesen und von den zu untersuchenden Signalen getrennt, die damit gesondert betrachtet werden können.

### Zusammenfassende Begriffserklärungen:

### λ-stack

spektrale Verteilung pro Bildpunkt, gemessen mit den Detektionskanälen mit dispersiver Aufspaltung der detektierten Strahlung, abgelegt in Speicherelementen unter Zuordnung zu mindestens einer zusätzlichen (Bildpunkt) Koordinaten x,y und/ oder Z und/ oder Meßzeit t

### Quantitative Analyse

Pro Bildpunkt wird der Beitrag (der Anteil) jeder Spektralsignatur zum gesamten von der Probe kommenden Signal (z.B.Fluoreszenzsignal) berechnet (Entmischungsverfahren). Die Berechnung erfolgt anhand von Referenzspektren, die das Spektrum der einzelnen Spektralsignaturen (z.B. Farbstoffe) charakterisieren und in einer Datenbank abgespeichert, aus dem Bild generiert (ROI) oder durch qualitative Analyse (PCA) generiert wurden sind.

### Bildkanäle :

Jedem gewählten Spektralbereich wird eine Farbe bei der bildlichen Darstellung der Probe zugeordnet (Falschfarbendarstellung), wobei die Intensität der Farbe dem Beitrag des Farbstoffs/ Spektralsignatur entspricht, gemessen wird beispielsweise in mehreren Detektionskanälen durch entsprechende Filter.

Ein farbkodiertes Bild (Mischbild) entsteht durch bildliche Darstellung mehrerer Farben überlagert, wenn in einem Probenbereich mehrere Spektralsignaturen / Farbstoffe enthalten sind:

### Qualitative Analyse

Jedem Bildpunkt wird die Spektralsignatur/ Farbstoff zugeordnet, der den größten Beitrag des gesamten von der Probe kommenden Signals erzeugt.

### Farbstoffmaske:

Spektralsignaturen / Farbstoffe an verschiedenen Orten werden mit unterschiedlichen Farben dargestellt, wobei die Intensität jeweils gleichmäßig ist.

### ROI:

Vom Nutzer ausgesuchte und markierte Regionen , wobei durch qualitative Analyse Gebiete gleiche Spektralsignaturen / Farbstoffe auch automatisch aufgesucht und markiert werden können

### Anwendungen der beschriebenen Detektionsmethode zur Identifikation von spektralen Signaturen mehrfach markierter Objekte.

### 1) Herstellung der Proben

In einem ersten Schritt werden die zu untersuchenden Proben gemäß ihrer spezifischen Eigenschaften mit mehreren Farbstoffen markiert. Bei den Proben kann es sich z.B um Chromosomen handeln, die mithilfe der FISH (Fluorescence in situ Hybridisation) Technik gefärbt wurden. Ebenso können Zellen oder Gewebe mit Fluoreszenztechniken (z.B. Immuncyto- und immunhistochemische Färbungen) gefärbt werden. Durch diese Färbetechniken werden die biologisch relevanten Informationen der Proben codiert.

### 2) Informationsgehalt der Proben

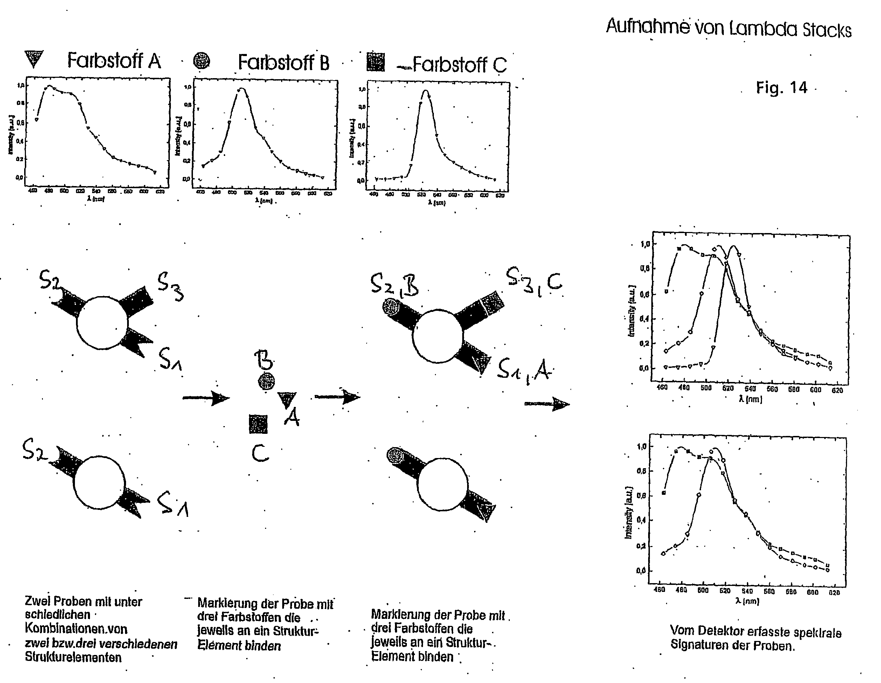

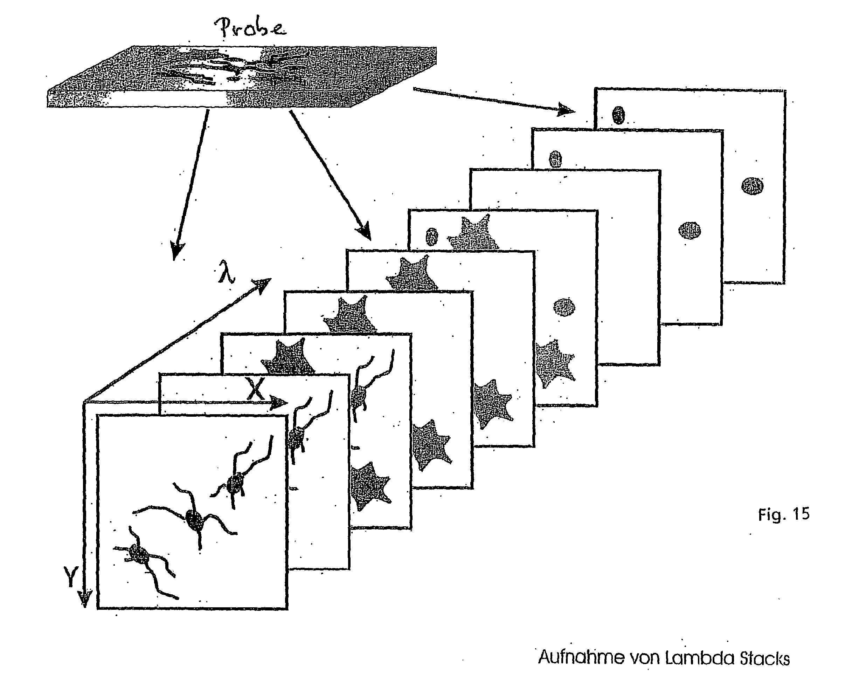

Im einfachsten Fall handelt es sich aus Sicht des Detektionssystems um eine räumlich eindimensionale Probe (z.B. Durchflußzytometer). Dabei ist die in der Probe enthaltene Information alleine durch die anteilige Kombination unterschiedlicher Farbstoffe codiert (Abb. 14). Bei der dargestellten Färbung wurden die Strukturmerkmale S1, S2 und S 3 mit den Farbstoffen A, B und C markiert. Farbstoffe können anhand ihrer charakteristischen Absorptions- oder Emissionsspektren unterschieden werden. Die Identifikation eines Spektrums (Spektrale Signatur) gestattet damit einen Rückschluß auf das Vorhandensein eines bestimmten Strukturmerkmals.
Die zu untersuchenden Proben unterscheiden sich bezüglich des Vorkommens der oben genannten Strukturmerkmale. Je nach Vorkommen der Kombinationen der Strukturmerkmale können Probenklassen definiert werden. Durch die Kombination der Markierungen werden die einzelnen Probenklassen unterschiedlich spektral kodiert.
Verwendet man zur Detektion Systeme, die eine zwei- oder dreidimensionale Ortsauflösung erlauben, erhöht sich der detektierbare Informationsgehalt beträchtlich. Die Anzahl möglicher Klassen steigt dadurch, daß Strukturmerkmale der Probe an unterschiedlichen Orten auftreten können. Die Abbildung (15) zeigt eine zwei -dimensionale Probe bei der drei unterschiedliche Strukturen markiert wurden. Der Einfachheit halber wurden hier nur die Markierungen, jedoch nicht die Strukturen selbst dargestellt. Probenklassen können nun durch die zwei- bzw. dreidimensionale Anordnung der verschiedenen Kombinationen der Strukturmerkmale definiert werden. Wird berücksichtigt, daß die unterschiedlichen Markierungen mit unterschiedlichen Intensitäten (Konzentrationen der Strukturen auf Probenebene) auftreten können, ergibt sich ein weiterer Parameter der zur Klassifizierung herangezogen werden kann.

### 3) Detektion und Klassifizierung

Die Proben werden hier vorteilhaft im 7 Schritten untersucht und ausgewertet

### Schritt 1

### Aufnahme von Lambda Stacks

Die Proben werden mit oben beschriebenen (Verweis) Detektor untersucht. Dabei entstehen aus den einzelnen spektral aufgelöst gemessenen Bildpunkten Lambda Stacks. d.h. spektrale Verteilungen pro Probenpunkt, abgelegt in Speicherelementen unter Zuordnung zu mindestens einer zusätzlichen Koordinate: Bildpunkt [Koordinaten x,y] und / oder Z und / oder Meßzeit t.

### Schritt 2

### Erfassung der Referenzspektren der verwendeten Farbstoffe unter Probenbedingungen

Referenzspektren sind z.B. die Emissionsspektren einzelner Farbstoffe unter Probenbedingungen, d.h. im Lösungsmittel gelöst, bzw. gebunden an Strukturen. Sie werden anhand von Lambda Stacks definiert. Dies sind spektrale Verteilungen pro Probenpunkt, abgelegt in Speicherelementen unter Zuordnung zu mindestens einer zusätzlichen Koordinate: Bildpunkt [Koordinaten x,y] und / oder Z und / oder Meßzeit t.
Im wesentlichen können hierzu drei Verfahren eingesetzt werden. Zum einen können die Referenzspektren von Proben gewonnen werden die mit jeweils nur einem Farbstoff markiert wurden. Jede Probe liefert dabei nur ein Spektrum. Die so gewonnenen können in einer spektralen Referenz Datenbank zur weiteren Verwendung abgelegt werden. Dieses Verfahren kann insbesondere bei der Durchflußzytometrie, der Laser Scanning Mikroskopie, der Total Internal Reflection Fluorescence Microscopy (TIRF) und der Nahfeld Mikroskopie angewendet werden.
Zum anderen ist es möglich mehrfach markierte (Referenz) Proben zur Gewinnung von Referenzspektren zu verwenden, wenn es möglich ist Probenbereiche zu definieren, die jeweils nur mit einem Farbstoff markiert sind.
Die Auswahl solcher Bereiche zur Generierung von Referenzspektren kann über die Definition von Regionen des Interesses (wie oben beschrieben) erfolgen. Die Definitition solcher Regionen kann auch durch Algorithmen zur automatisierten Erkennung von zwei- oder dreidimensionalen Objekten erfolgen. Diese Herangehensweise ist bei Systemen anwendbar die ortsaufgelöste Probeninformationen erfassen. Dazu zählen z.B. die Laser Scanning Mikroskopie die Total Internal Reflection Fluorescence Microscopy (TIRF) und die Nahfeld Mikroskopie.
Eine dritte Möglichkeit zur Erzeugung der Referenzspektren ist die Principle Component Analysis (PCA). Dabei werden Lambda Stacks von mehrfach markierten (Referenz) Proben mit dem oben beschriebenen Detektor aufgenommen. Die Anwendung der PCA auf diese Daten liefert die Referenzspektren.

### Schritt 3

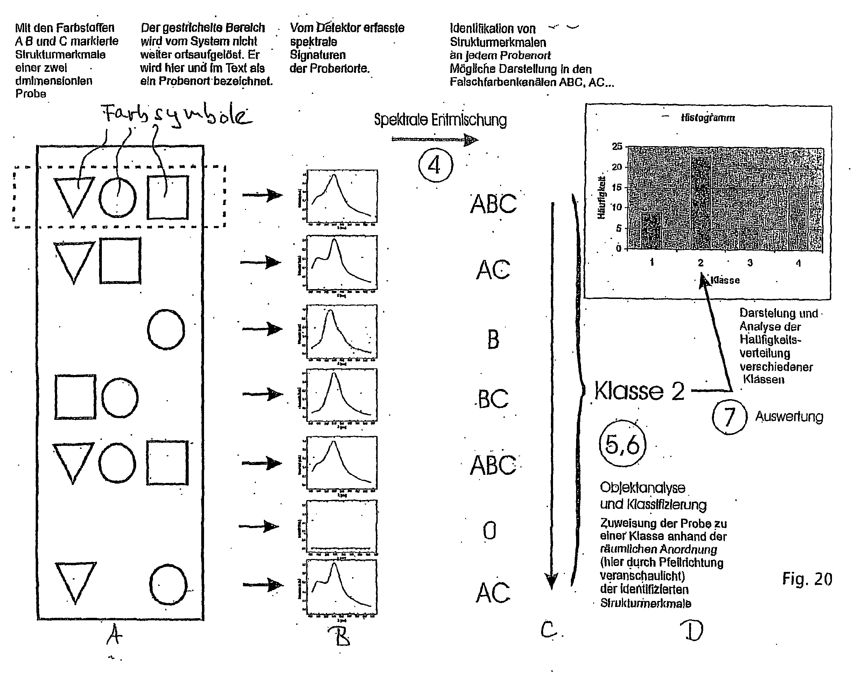

### Objekterkennung (Fig.20A)

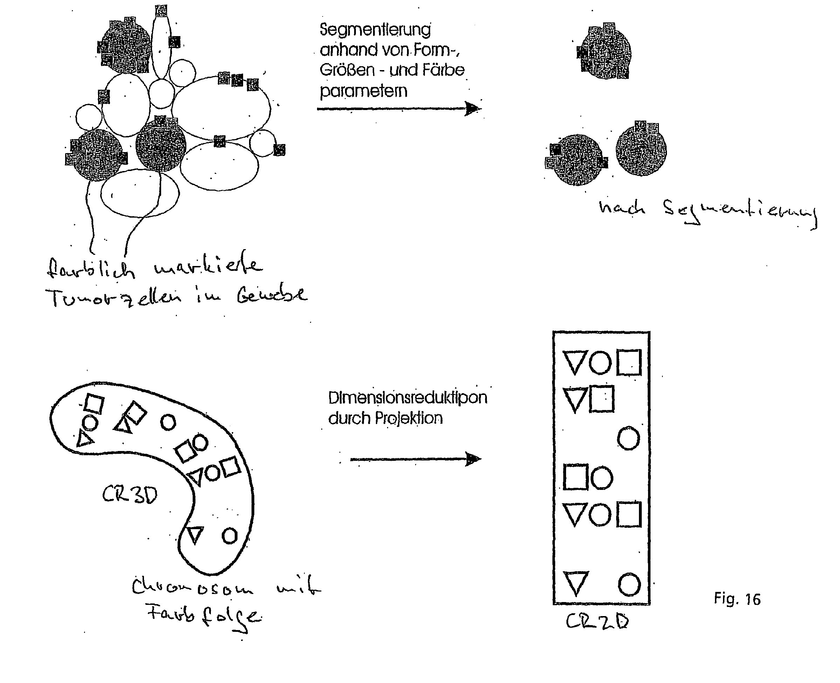

Einsatz bildanalytischer Verfahren (Binärisierung, Segmentierung) zur Selektion der zu untersuchenden Elemente der Probe (Zellen, Zellbestandteile z.B. Tumorzellen, Chromosomen- in Fig. 16A schematisch dargestellt). Farblich markierte runde Tumorzellen werden beispielsweise anhand ihrer Form selektiert.
Sollen mehrdimensionale Objekte erkannt werden können Projektionen in Systeme mit weniger Dimensionen notwendig werden. So kann ein Chromosom CR 3D mit einer drei- dimensionalen Ausdehnung im Zellkern, zuerst als zusammenhängendes Objekt definiert und anschließend zur weiteren Analyse in ein zweidimensionales Bild projiziert werden (Abb 16B). Die in Fig. 16 dargestellten unterschiedlichen geometrischen Formen ( Dreieck, Kreis, Quadrat) entsprechen unterschiedlichen Markern.

### Schritt 4

### Entmischung (Fig. 20B,C)

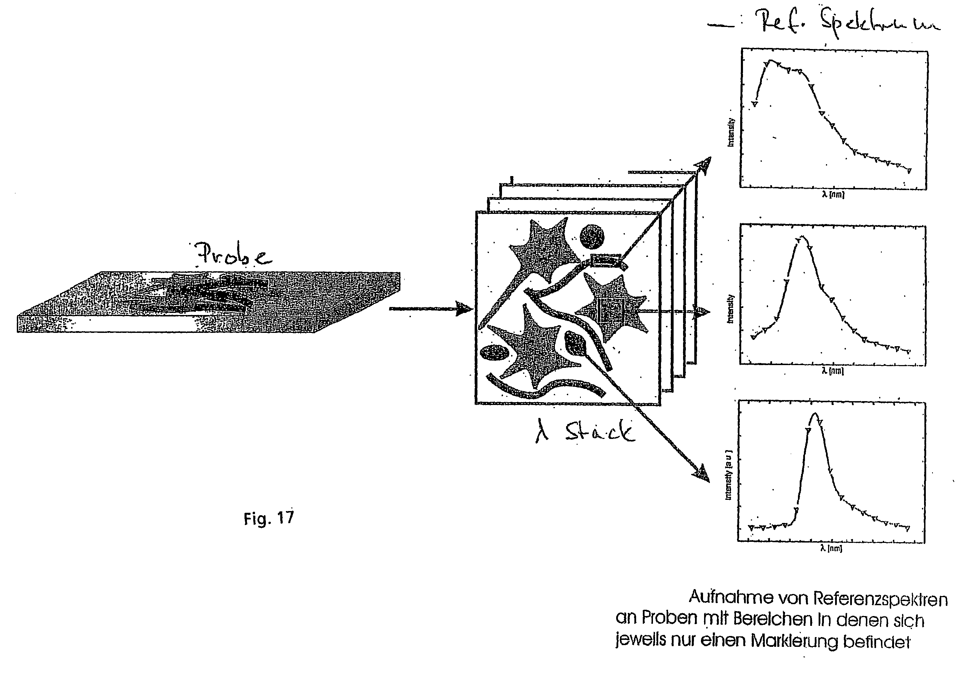

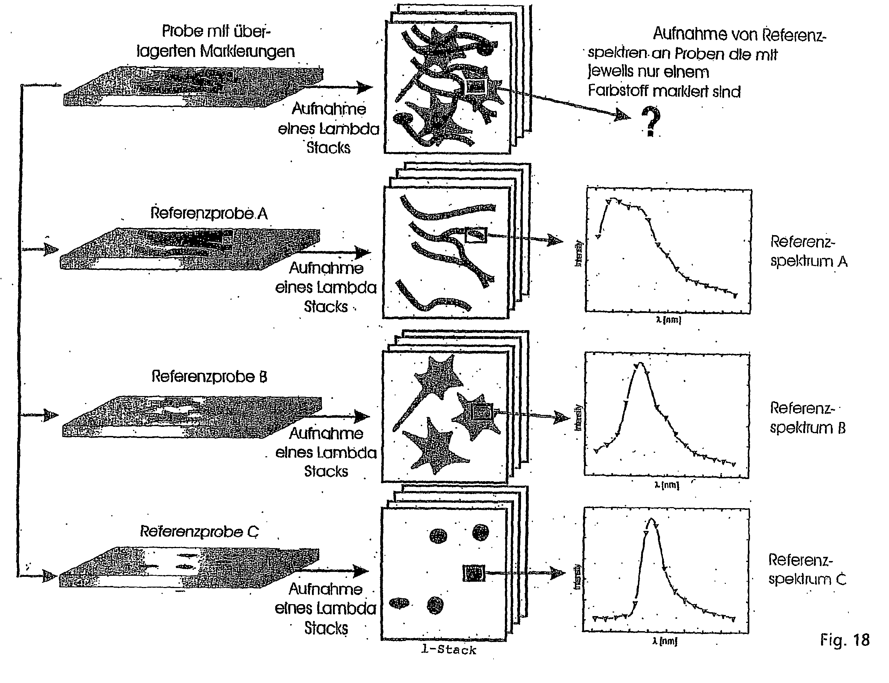

Ziel dieses Schrittes ist es Mehrkanalbilder von mehrfach markierten Proben zu erzeugen. Dabei ist es von entscheidender Bedeutung, daß es mit diesem Verfahren möglich ist, das gesamte Emissionssignal eines dieser Farbstoffe genau einem Falschfarbkanal zuzuordnen. Die Emissionsignale können dabei stark überlappen. Zur Erzeugung der Mehrkanalbilder können zwei Verfahren angewendet werden:
1.) Gibt es in der zu untersuchenden Probe Bereiche B1,B2,B3 in Fig.17, die jeweils nur mit einem Farbstoff markiert sind kann die Probe selbst zur Generierung der Referenzspektren (siehe oben) verwendet werden. Auf der Basis der so definierten Referenzspektren kann durch Anwendung der Linearen Entmischung (Lit.: Lansford, et al.; Journal of Biomedical Optics 6(3), 311-318, (July 2001) auf den Lambda Stack der Probe das Mehrkanalbild erzeugt werden.
2.) Lassen sich in der Probe keine Bereiche definieren, die jeweils nur mit einem Farbstoff markiert sind (Fig.18), können Referenzproben die mit jeweils einem Farbstoff markiert wurden zur Erzeugung der Referenzspektren verwendet werden. Die so definierten Referenzspektren werden wie oben beschrieben in einer spektralen Referenzdatenbank gespeichert und zur Linearen Entmischung der Proben Daten (Lambda Stacks) verwendet. Im Ergebnis ensteht ein falschfarbencodiertes Mehrkanalbild
3.) Störende Hintergrundsignale (z.B. Autofluoreszenzenz und Streulicht) können ebenfalls spektral charakterisiert werden. Das heißt, auch dem Hintergrund Signal wird ein Referenzspektrum zugeordnet. Wird das Referenzspektrum des Hintergrundsignals bei der linearen Entmischung berücksichtigt, erhält man ein falschfarbencodiertes Mehrkanalbild bei dem ein Kanal das Hintergrundsignal repräsentiert. Durch Ausblenden des Hintergrundkanals kann man das Mehrkanalbild Hintergrund korrigieren. Alternativ können zusätzliche Informationen über die Probe aus dem Hintergrundsignal gewonnen werden.
4.) Alternativ zur Linearen Entmischung können Mehrkanalbilder aus den Lambdastacks auch durch die Principle Component Analysis (PCA) gewonnen werden.

Die so gewonnenen Mehrkanalfalschfarben Bilder enthalten alle oben beschriebenen Informationen der Probe. Damit Rückschlüsse über die Verteilung der Strukturmerkmale in der Probe möglich.

### Schritt 5 Objektanalyse (Fig. 16 und 20C)

Hier werden die zuvor definierten Objekte bezüglich der Verteilung der Srukturmerkmale untersucht. Dafür werden die Intensitäten der Falschfarbkanäle (siehe Schritt 4) an verschiedenen Orten der Objekte gemessen. Diese Orte werden derart ausgewählt, daß sie den gewünschten Informationsgehalt der Probe repräsentieren.

### Schritt 6 Klassifizierung

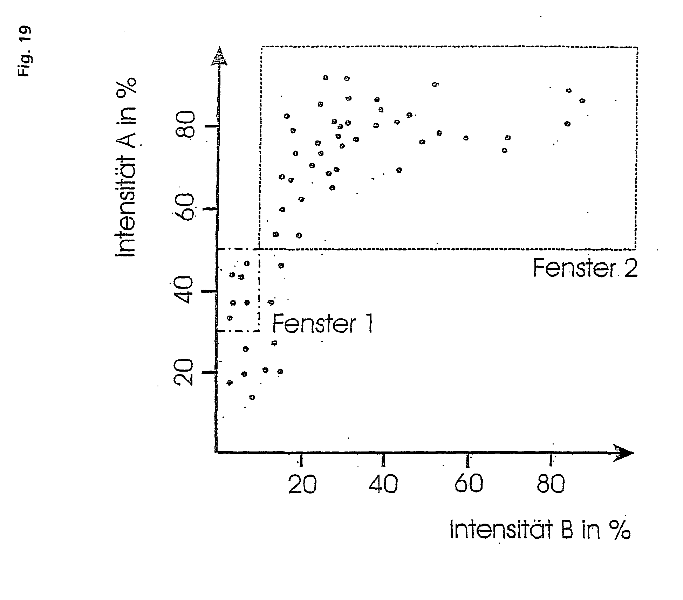

Ziel der Klassifizierung ist es, Proben anhand der Verteilung ihrer Strukturmerkmale zu unterscheiden und verschiedenen Klassen zuzuordnen. Ein Klasse wird definiert durch das Vorkommen einer bestimmten Kombination von Strukturmerkmalen in der Probe.
Zur Klassifizierung wird zusätzlich zur spektralen Information mindestens eine weitere Koordinate (Bildpunkt [Koordinaten x,y] und / oder Z und / oder Zeit t) verwendet.
Zur Definition von Klassen kann zum Beispiel ein Scatter - Diagramm verwendet werden. In Fig. 19 ist das Scatterdiagramm eines Zweikanal Fluoreszenzbildes dargestellt. Die beiden Achsen repräsentieren die Fluoreszenzintensitäten der Bildkanäle. Die Häufigkeit mit der ein Pixel der Bildes einer Koordinate des Scatter- Diagramms zugeordnet wird , kann farbcodiert dargestellt werden (blau: wenig Pixel, rot viele Pixel).
Im folgenden wird anhand eines zweifachmarkierten Fluoreszenzprobe gezeigt, wie eine Klasssifizierung mit Hilfe von Scatterdiagrammen vorgenommen werden kann. Zuerst werden Referenzproben untersucht, die jeweils nur Elemente einer Klasse enthalten. Von den Zweikanalbildern dieser Proben werden zweidimensionale Scatter Diagramme berechnet. Jede Dimension entspricht repräsentiert die Fluorszenzintensität eines Farbstoffes. Nun können im Scatter Diagramm über Fenster des Interesses (FI) Intensitätsbereiche der Typen:

### F1

Intensität Farbstoff: A 30- 50%, Intensität des Farbstoffs B: 0-10% :

### F2

Intensität Farbstoff: A 50- 100%, Intensität des Farbstoffs B: 30-100%
etc. definiert werden. Dabei werden solche Fls, oder Kombinationen von Fls definiert, die Klassenspezifische Eigenschaften der Proben repräsentieren. Im nächsten Schritt werden die Zweikanalfluoreszenzbilder der zu untersuchenden Proben aufgenommen. Von diesen Bildern werden Scatter Diagramme berechnet. Diese Diagramme werden mit hilfte der zuvor definierten Fls der Referenz Scatterdiagramme ausgewertet.
Es ist vorteilhaft, die dargestellte Vorgehensweise auf mehr als zwei Dimensionen auszudehnen. Diese Dimensionen können spektrale, räumliche oder dynamische Probeneigenschaften repräsentieren.
Die Klassifizierung kann zur Analyse von Daten verwendet werden, die mit bildgebenden und analytischen Mikroskopiesystemen erfasst wurden. Die Mikroskopsysteme sind bildgebende Systeme wie Laser-Scanning-Mikroskope zur dreidimensionalen Untersuchung von biologischen Präparaten, Scanning-Nahfeld-Mikroskope zur hochaufgelösten Untersuchung von Oberflächen und Fluoreszenzkorrelations-Mikroskope zur quantitativen Bestimmung von Molekülkonzentrationen und Diffusionseigenschaften.
Die Klassifizierung kann in weiteren auf Fluoreszenzdetektion basierenden Verfahren, wie in Systemen zum Screenen von Wirkstoffen und zur Durchflußzytometrie angewendet werden. Bei durchflußzytometrischen Verfahren können die Proben (z.B. menschliche Zellen) nach der Klassifizierung noch physikalisch voneinander getrennt werden.
Natürlich sind auch Fragestellungen denkbar bei denen eine Klassifizierung der Proben nicht nötig ist.

### Schritt 7 Auswertung

Durch die Klassifizierung erhält man Klassen durch die Probeneigenschaften oder Kombinationen von Probeneigenschaften abgebildet werden.
Bei der Auswertung können verschiedene Fragestellungen auftreten. So kann es von Interesse sein, ob sich eine Probe einer bekannten Klasse zuordnen lässt oder nicht. Lassen sich die Proben den Klassen zuordnen, möchte man in der Regel wissen, wieviele Proben einer Klasse zuzuordnen sind. Dies Information lässt sich auf unterschiedliche Weise darstellen.
Vorzugsweise werden dazu Histogramme verwendet (siehe Abb. 20D).
Im dargestellten Diagramm ist die unterschiedliche Häufigkeit der Zuordnung zu bestimmten Klassen dargestellt.

Fig.20 stellt im Übrigen eine Zusammenfassung der geschilderten Verfahrensschritte dar.

Die Erfindung betrifft insbesondere die Identifizierung von
(vorzugsweise) dreidimensionalen Objekten anhand ihrer räumlichen Ausdehnung und spektralen Signatur.
Die räumliche Ausdehnung kann über Bildverarbeitung z.B. aus der Kontrastanalyse aus einem Detektionskanal ermittelt werden.
Gleichzeitig liegen über die gewählte Detektionsanordnung zu jedem Bildpunkt die lambda- Stacks vor.
Hier ist die wellenlängenabhängige Intensitätsverteilung pro Bildpunkt selektiv, d.h. für ausgewählte Wellenlängen oder Wellenlängenbereiche , ermittelbar.
Überlappende Signale von Fluorophoren können durch "unmixing " anhand von Referenzspektren getrennt werden.
Die Vorteile der optischen und elektronischen Anordnung (parallele Aquise von Daten, keine Fouriertransformation wie bei interferometrischen Anordnungen erforderlich, Schnelligkeit) führen zu einer neuen Qualität bei Screening Verfahren und der Untersuchung insbesondere lebender Proben ( Zellwachstum), bei der Beobachtung schnell ablaufender Prozesse, z.B. Formänderungen von Nervenzellen, Änderung Ionenkonzentrationen).
So können u.a. Tumorzellen anhand ihrer Form erkannt, spektral klassifiziert und auf ihre Fluoreszenzeigenschaften untersucht werden.
Geknickte Chromosomen können beispielsweise vorteilhaft gesucht, identifiziert und zur spektralen Auswertung gestreckt werden.
Hier kann es sich bei den zu untersuchenden Proben um Chromosomen handeln, die mithilfe einer FISH-Technologie (z.B. Multi Color Banding) gefärbt wurden. Die untersuchten Zellen, Gewebe oder Organismen können Immuncytologisch oder Immunhistochemisch gefärbt werden
Die oben geschilderten Verfahren sind zur
zur medizinischen Diagnose und / oder Therapie, zur Umweltdiagnose (z.B. Wasser, Boden, Luft) mit Hilfe lebender Indikatoren, zur Diagnose von Tumoren, zur Diagnose und Reinigung von Knochenmarkszellen und zur Anwendung in einem Durchflußzytometer oder einem optischen Nahfeldmikroskop geeignet.

## Patentansprüche

1. Verfahren zur Untersuchung von mittels Fluoreszenzmarkem fluoreszierenden Proben mit einem Laser-Scanning-Mikroskop,
wobei die Probe punktweise oder linienweise in mindestens einem Flächenschnitt abgetastet wird und während der Abtastung eine dispersive Aufspaltung der von der Probe kommenden Strahlung erfolgt,
wobei die aufgespaltete Strahlung mittels mindestens einer Reihe von Detektorelementen wellenlängenabhängig detektiert wird,
**dadurch gekennzeichnet, dass**
anhand der aufgezeichneten und abgespeicherten Intensitätsverteilung mindestens eines dieser Detektionselemente und/oder mindestens eines weiteren Detektionselementes für die von der Probe emittierte Strahlung durch Bildverarbeitung eine Auswahl von zwei- oder dreidimensionalen Probenteilen
erfolgt, die vorgespeicherten zwei- oder dreidimemionalen geometrischen Objekten entsprechen oder ähneln
und für mindestens einen Teil dieser Probenbereiche eine Analyse der spektralen Signatur bezüglich der an Ihnen angeordneten Fluoreszenzmarker erfolgt, indem
- unter Zuordnung von X,Y oder Z - Bildkoordinaten und/oder der Messzeit pro Probenpunkt die spektrale Verteilung des Probenlichtes abgespeichert wird
- von verwendeten Farbstoffen zur Fluoreszenzanregung die Referenzspektren abgespeichert werden
- eine Objekterkennung der Probenteile erfolgt
- eine Entmischung der spektralen Verteilung erfolgt
- die erkannten Objekte bezüglich der Verteilung der Strukturmerkmale untersucht werden
- Objekte mit unterschiedlichen Strukturmerkmalen in Klassen eingeteilt werden, die unterschiedlichen Probeneigenschaften entsprechen.

2. Verfahren nach Anspruch 1, wobei eine Aufnahme in mehreren Flächenschnitten erfolgt und ein dreidimensionales Bild der Probenverteilung abgespeichert wird, und der Probenverteilung die für Probenpunkte oder Probenbereiche detektierte und abgespeicherte spektrale Verteilung des Probenlichtes zugeordnet wird.

3. Verfahren nach einem der vorangehenden Ansprüche, wobei
eine Ermittlung des zeitabhängigen geometrischen und/oder spektralen Verhaltens der Probenbereiche erfolgt.

4. Verfahren nach einem der vorangehenden Ansprüche, wobei
dreidimensionale Objekte vor der spektralen Analyse in ihrer Form verändert werden, vorzugsweise in Richtung einer flachen flächenhaften Ausdehnung.

5. Verfahren nach einem der vorangehenden Ansprüche, wobei
eine Ermittlung der geometrischen Form in mehreren Wellenlängenbereichen der Detektion erfolgt.

6. Verfahren nach einem der vorangehenden Ansprüche, wobei
eine Detektion Ober eine Empfängerzeile, vorzugsweise einen Mehrkanal-PMT oder eine Diodenzeile erfolgt.

7. Verfahren nach Anspruch 1, wobei es sich bei den zu untersuchenden Proben um Chromosomen handelt.

8. Verfahren nach Anspruch 1, wobei es sich bei den zu untersuchenden Proben um Chromosomen handelt, die mithilfe einer Fluorescence in situ Hybridisartion gefärbt wurden.

9. Verfahren nach Anspruch 1, wobei die Zellen, Gewebe oder Organismen immuncytologisch oder immunhistochemisch gefärbt wurden.

10. Vesfahren nach einem der Ansprüche 1-9,
zur medizinischen Diagnose.

11. Verfahren nach einem der Ansprüche 1-9, zur Umweltdiagnose mit Hilfe lebender Indikatoren**.**

12. Verfahren nach einem der Ansprüche 1-9, zur Diagnose von Tumoren.

13. Verfahren nach einem der Ansprüche 1-9, zur Diagnose und Reinigung von Knochenmarkszellen.

14. Verfahren nach einem der Ansprüche 1-9, in einem Durchflußzytometer oder einem optischen Nahfeldmikroskop

## Claims

1. Method for analysing samples, fluorescing by means of fluorescence markers, with the aid of a laser scanning microscope, the sample being scanned pointwise or linewise in at least one surface section, and dispersive splitting of the radiation coming from the sample being performed during the scanning, the split radiation being detected by means of at least one row of detector elements as a function of wavelength, **characterized in that** the recorded and stored intensity distribution of at least one of these detector elements and/or of at least one further detector element for the radiation emitted by the sample is used in image processing to select two-dimensional or three-dimensional sample parts which correspond to, or resemble the prestored two-dimensional or three-dimensional geometrical objects, and for at least some of these sample regions the spectral signature is analysed with reference to the fluorescence markers arranged thereon, **in that**
- the spectral distribution of the sample light is stored by assigning X, Y or Z image coordinates and/or the measuring time per sample point,
- the reference spectra of stains used for excitation of fluorescence are stored,
- an object recognition of the sample portions takes place,
- a demixing of the spectral distribution takes place,
- the detected objects are analysed with reference to the distribution of the structural features, and
- objects having different structural features are divided into classes which correspond to different sample properties.

2. Method according to Claim 1 in which a recording is made in a plurality of surface sections and a three-dimensional image of the sample distribution is stored, and the sample distribution is assigned the spectral distribution of the sample light detected and stored for sample points or sample regions.

3. Method according to one of the preceding claims, in which a determination of the time-dependent geometrical and/or spectral behaviour of the sample regions is performed.

4. Method according to one of the preceding claims, in which the shape of three-dimensional objects is varied before the spectral analysis, preferably in the direction of a flat planar extent.

5. Method according to one of the preceding claims, in which a determination of the geometrical shape is performed in a plurality of wavelength regions of the detection.

6. Method according to one of the preceding claims, in which a detection is performed via a receiver line, preferably a multichannel PMT or a diode line.

7. Method according to Claim 1, in which the samples to be analysed are chromosomes.

8. Method according to Claim 1, in which the samples to be analysed are chromosomes which have been stained with the aid of a fluorescence in situ hybridization.

9. Method according to Claim 1, in which the cells, tissues or organisms have been stained for immunocytology or immunohistochemistry.

10. Method according to one of Claims 1-9, for medical diagnosis.

11. Method according to one of Claims 1-9, for environmental diagnosis with the aid of living indicators.

12. Method according to one of Claims 1-9, for diagnosis of tumours.

13. Method according to one of Claims 1-9, for diagnosis and purification of bone marrow cells.

14. Method according to one of Claims 1-9, in a through flow cytometer or an optical near field microscope.

## Revendications

1. Procédé pour examiner, à l'aide d'un microscope à balayage par laser, des échantillons qui fluorescent à l'aide de marqueurs de fluorescence,
l'échantillon étant soumis à un balayage ponctuel ou linéaire dans au moins une coupe superficielle, une division, par dispersion, du rayonnement provenant de l'échantillon ayant lieu pendant le balayage,
où le rayonnement divisé est, à l'aide d'au moins une série d'éléments détecteurs, détecté en fonction de la longueur d'onde,
**caractérisé en ce que**
à l'aide de la distribution des intensités, enregistrée et mémorisée, d'au moins l'un de ces éléments de détection et/ou d'au moins un élément de détection supplémentaire, on procède pour le rayonnement émis par l'échantillon, par un traitement d'image, à une sélection de parties d'échantillon bidimensionnelles ou tridimensionnelles, qui correspondent ou ressemblent à des objets géométriques bidimensionnels ou tridimensionnels prémémorisés,
et, pour au moins une partie de ces domaines d'échantillons, on procède à une analyse de la signature spectrale, concernant les marqueurs de fluorescence qui leur sont attribués,
où
- par affectation de coordonnées d'images X, Y ou Z, et/ou du temps de mesure par points de l'échantillon, on mémorise la distribution spectrale de la lumière de l'échantillon,
- on mémorise les spectres de référence de colorants utilisés pour l'excitation par fluorescence,
- on procède à une reconnaissance d'objet des parties de l'échantillon,
- on procède à une dissociation de la distribution spectrale,
- on examine les objets reconnus, pour ce qui concerne la distribution de leurs caractéristiques de structure,
- on répartit les objets présentant différentes caractéristiques de structure, en classes qui correspondent aux différentes propriétés de l'échantillon.

2. Procédé selon la revendication 1, dans lequel on procède à un enregistrement dans plusieurs coupes superficielles, et on mémorise une image tridimensionnelle de la distribution des échantillons, et on affecte à la distribution des échantillons la distribution spectrale de la lumière des échantillons, détectée et mémorisée pour les points ou les domaines des échantillons.

3. Procédé selon l'une des revendications précédentes, dans lequel on procède à une détermination du comportement géométrique et/ou spectral, dépendant du temps, des domaines des échantillons.

4. Procédé selon l'une des revendications précédentes, dans lequel, avant l'analyse spectrale, on procède à une modification de la forme d'objets tridimensionnels, de préférence dans le sens d'une extension bidimensionnelle plane.

5. Procédé selon l'une des revendications précédentes, dans lequel on procède à une détermination de la forme géométrique dans plusieurs domaines de longueurs d'onde de la détection.

6. Procédé selon l'une des revendications précédentes, dans lequel on procède à une détection sur une ligne de récepteurs, de préférence un tube photomultiplicateur PMP multicanaux, ou une ligne de diodes.

7. Procédé selon la revendication 1, dans lequel, pour ce qui concerne les échantillons à examiner, il s'agit de chromosomes.

8. Procédé selon la revendication 1, dans lequel, pour ce qui concerne les échantillons à examiner, il s'agit de chromosomes qui ont été colorés par hybridation par fluorescence in situ.

9. Procédé selon la revendication 1, dans lequel les cellules, les tissus ou les organismes ont été colorés par une technique immunocytologique ou immunohistochimique.

10. Procédé selon l'une des revendications 1 à 9 pour le diagnostic médical.

11. Procédé selon l'une des revendications 1 à 9, pour le diagnostic de l'environnement à l'aide d'indicateurs vivants.

12. Procédé selon l'une des revendications 1 à 9, pour le diagnostic des tumeurs.

13. Procédé selon l'une des revendications 1 à 9, pour le diagnostic et la purification de cellules myéloïdes.

14. Procédé selon l'une des revendications 1 à 9, dans un cytomètre en flux ou un microscope optique en champ proche.
